# EUROPÄISCHE PATENTANMELDUNG

(11) **EP 4 368 392 A1**
(43) Veröffentlichungstag der Anmeldung: **15.05.2024**
(21) Anmeldenummer: 23208208.1
(22) Anmeldetag: 07.11.2023
(51) Int. Cl.: B32B 29/00, D21F 9/00, D21F 11/04, D21H 11/02, D21H 11/14, D21H 27/38

(54) **VERFAHREN ZUR HERSTELLUNG EINER BEDRUCKBAREN LINERBAHN FÜR VERPACKUNGEN SOWIE BEDRUCKBARER LINER FÜR VERPACKUNGEN**

(30) Priorität: 08.11.2022 AT 508502022
(71) Anmelder: Mondi AG, 1030 Wien (AT)
(72) Erfinder: BACOVSKY, Georg, 3040 Neulengbach (AT); SCHEIFLINGER, Roland, 3100 St. Pölten (AT); MEYSEL, Harald, 3100 St. Pölten (AT)
(74) Vertreter: Burger, Hannes

(57) **Zusammenfassung**

Die Erfindung betrifft ein Verfahren zur Herstellung einer bedruckbaren, mehrlagigen Linerbahn (1) für Verpackungen. Bei dem Verfahren wird eine erste Papierlage (4) aus einer erste Pulpe (2) hergestellt, welche einen Cellulosefasern umfassenden, gebleichten ersten Zellstoff (3) umfasst. Weiters wird eine zweite Papierlage (7) aus einer zweiten Pulpe (5) hergestellt, welche einen Cellulosefasern umfassenden, ungebleichten zweiten Zellstoff (6) umfasst. Die erste Papierlage (4) und die zweite Papierlage (7) werden zu einer mehrlagigen Papierbahn (8) verbunden, und in einer mehrstufigen Entwässerung/Trocknung zu einer mehrlagigen Linerbahn (1) verarbeitet. Dabei wird durch die erste Papierlage (4) eine Drucklage (9) und durch die zweite Papierlage (7) eine mit dieser Drucklage (9) unmittelbar verbundene Trägerlage (10) gebildet. Dabei ist vorgesehen, dass die erste Papierlage (4) aus der ersten Pulpe (2) mittels einer ersten Formeranordnung (18) direkt auf einem Langsieb (19) der ersten Formeranordnung (18) gebildet wird, und dass die zweite Papierlage (7) aus der zweiten Pulpe (5) mittels einer zweiten Formeranordnung (20) direkt auf die erste Papierlage (4) gebildet wird, sodass die erste Papierlage (4) und die zweite Papierlage (7) zu der mehrlagigen Papierbahn (8) verbunden werden.

## Beschreibung

Die Erfindung betrifft ein Verfahren zur Herstellung einer bedruckbaren bzw. zum Bedrucken vorgesehenen, mehrlagigen Linerbahn für Verpackungen sowie einen bedruckbaren bzw. zum Bedrucken vorgesehenen, mehrlagigen Liner für Verpackungen.

Produkthersteller und/oder -händler verlangen nach bedruckbaren Verpackungen für ihre Produkte, beispielsweise um grafische Darstellungen der beinhalteten Produkte und/oder Produktinformationen für Konsumenten darzustellen. Solche Produktverpackungen sind in vielen Branchen gebräuchlich, beispielsweise im Bereich Lebensmittel- oder Geräteproduktion bzw. -handel. Vermehrt wird hier eine hohe Druckqualität, insbesondere eine hohe Farbdichte, Farbbrillanz sowie ein hoher Kontrast der auf einem Verpackungspapier aufgebrachten Druckbilder gefordert, um das verpackte Produkt möglichst attraktiv und kaufanregend darzustellen. Trotz der hohen Anforderungen an die Druckqualität sollen Verpackungspapiere möglichst kostengünstig herstellbar sein. Zudem wird vermehrt eine hohe Nachhaltigkeit gefordert, um primäre Ressourcen und damit die Umwelt zu schonen.

Bedruckbare Papiere für Verpackungen können einerseits als eigenständige Verpackungspapiere ausgebildet sein, wie zum Beispiel bei Umverpackungspapieren. Alternativ kann ein gattungsgemäßes Papier für Verpackungen aber auch einen Bestandteil, insbesondere eine bedruckbare, äußere Papierlage einer Verpackung bilden, wie dies häufig bei Kartonverpackungen der Fall ist. Gattungsgemäße, mehrlagige Papiere bzw. Papierlagen werden auch als Liner oder Papierliner bezeichnet. Insofern kann auch das gegenständliche, bedruckbare, mehrlagige Papier für Verpackungen als Liner, oder Papierliner bezeichnet werden. Ein noch nicht konfektionierter Liner, welcher als noch nicht in sein zur Verpackung erforderliches bzw. geeignetes Format (end-)konfektioniert ist, respektive sich nach der dem Aufwickler der Papiermaschine auf einer Haspel / Rolle befindet, wird im Kontext der vorliegenden Erfindung als Linerbahn, oder Papierlinerbahn bezeichnet.

Es sind mehrlagige Verpackungspapiere bzw. Papierliner bekannt, welche eine äußere, zum Bedrucken vorgesehene Drucklage, Toplage bzw. Decklage aus gebleichtem Fasermaterial und eine darunter liegende Trägerlage aus ungebleichtem Cellulose-Fasermaterial, inklusive ungebleichtem Recycling-Fasermaterial aufweisen. Für Liner mit einer weißen, bedruckbaren Druck-, Top-, oder Decklage wird branchenüblich auch die englische Bezeichnung White Top Liner (WTL) verwendet. Dabei wird je nach eingesetztem Zellstoff in White Top Kraftliner (WTKL) und in White Top Testliner (WTTL) unterschieden.

WTKL bezeichnet einen bedruckbaren Kraftliner, welcher zu einem hohen Anteil, also zu annähernd 100% aus frischem Zellstoff hergestellt ist. Mit frischem Zellstoff bzw. Frischfaser ist ein Zellstoff aus primären Ressourcen, also ein nicht recycelter Zellstoff bzw. ein nicht recyceltes Fasermaterial, gemeint. Bei Kraftlinern wird für die Drucklage üblicherweise gebleichter Zellstoff, und für die Trägerlage ungebleichter Zellstoff eingesetzt. Der Einsatz von frischem Zellstoff ermöglicht eine hohe Produktqualität im Hinblick auf eine Bedruckbarkeit und Festigkeit, ist jedoch wenig nachhaltig und geht mit hohen Produktionskosten einher.

WTTL bezeichnet einen bedruckbaren Testliner, welcher zu 100% oder zumindest annähernd zu 100% aus recyceltem Zellstoff hergestellt ist. Bei Testlinern wird für die Drucklage üblicherweise gebleichter recycelter Zellstoff, und für die Trägerlage ungebleichter recycelter Zellstoff eingesetzt. Testliner erfüllen zwar die hohen Anforderungen an die Nachhaltigkeit, weisen jedoch eine geringere Festigkeit auf, welche selbst durch einen oberflächlichen Stärkeauftrag nicht auf zufriedenstellende Art und Weise verbessert werden kann. In einer Papiermaschine zur Herstellung von WTTL wird üblicherweise eine Siebpartie, respektive eine Formersektion oder eine Formeranordnung umfassend zwei, drei oder noch mehr sogenannte Fourdrinier-Siebe, also Langsiebe bzw. Untersiebe, verwendet. Dies limitiert die Produktionsgeschwindigkeit und erhöht somit die Produktionskosten.

Um die Oberflächeneigenschaften der Drucklage hinsichtlich einer Bedruckbarkeit positiv zu beeinflussen, wird die Pressenpartie einer Papiermaschine üblicherweise als Offsetpresse mit einer auf die Drucklage wirkenden Glättungswalze ausgebildet. Eine Glättungswalze kann auch integriert in eine Trocknungspartie oder auch als zusätzliche Maschine angeordnet sein. Beide Varianten führen zwar zu einer verbesserten Bedruckbarkeit, limitieren jedoch die Maschinengeschwindigkeit und erhöhen die Betriebskosten und damit insgesamt die Produktionskosten.

Sowohl bei bedruckbaren Kraftlinern, als auch bei bedruckbaren Testlinern wird für die Drucklage üblicherweise gebleichter Zellstoff eingesetzt, um möglichst gute Bedruckbarkeit, insbesondere eine hohe Farbdichte und Farbbrillanz sowie einen hohen Kontrast zu erhalten. Durch den Einsatz von Recycling-Fasermaterial weist die zum Bedrucken vorgesehene Oberfläche der Toplage häufig ein gräuliches oder bräunliches Erscheinungsbild auf. Auch recycelte, weiße Fasern haben einen niedrigeren Weißgrad als gebleichter Frischfaserzellstoff. Dies da das ungebleichte Fasermaterial der unteren Trägerlage durch die Druck-,Top- bzw. Decklage aus gebleichtem Fasermaterial quasi durchscheint. Hierdurch ergeben sich Nachteile hinsichtlich der Druckqualität, insbesondere können aufgedruckte Druckbilder farblich verfälscht erscheinen. Um eine gute Bedruckbarkeit zu ermöglichen, muss bei der Produktion von WTL darauf geachtet werden, keine Verunreinigungen von der ungebleichten Trägerlage auf die gebleichte, möglichst weiße Drucklage zu transferieren.

Eine mehrlagige Linerbahn für Verpackungen bzw. ein entsprechender Liner ist zum Beispiel aus EP1392923B1 bekannt.

Bisher ist es nicht gelungen einen White Top Liner, insbesondere einen White Top Kraftliner, herzustellen, welcher sowohl eine möglichst gute Druckqualität, insbesondere eine hohe Farbdichte und Farbbrillanz sowie einen hohen Kontrast, bietet, als auch den hohen Anforderungen an die Nachhaltigkeit entspricht und darüber hinaus kosteneffizient und ressourcenschonend hergestellt werden kann.

Aufgabe der vorliegenden Erfindung war es, die noch bestehenden Nachteile des Standes der Technik zu überwinden und zum einen ein in ökonomischer und ökologischer Hinsicht verbessertes Verfahren zur Herstellung eines bedruckbaren Papiers für Verpackungen bereitzustellen, mittels welchem Verfahren ein Papier mit guten mechanischen Eigenschaften und gleichzeitig guter Bedruckbarkeit hergestellt werden kann. Weiters war es Aufgabe der Erfindung ein Papier für Verpackungen mit guten mechanischen Eigenschaften und gleichzeitig guter Bedruckbarkeit zur Verfügung zu stellen, welches Papier in ökonomischer und ökologischer Hinsicht verbessert herstellbar ist.

Diese Aufgabe wird zum einen durch ein Verfahren gemäß den Ansprüchen gelöst.

Das erfindungsgemäße Verfahren zur Herstellung einer bedruckbaren, mehrlagigen Linerbahn für Verpackungen umfasst die Schritte:
- Herstellung einer ersten Pulpe umfassend einen Cellulosefasern umfassenden, gebleichten ersten Zellstoff und Bildung einer ersten Papierlage aus der ersten Pulpe,
- Herstellung einer zweiten Pulpe umfassend einen Cellulosefasern umfassen-den, ungebleichten zweiten Zellstoff und Bildung einer zweiten Papierlage aus der zweiten Pulpe,
- Verbinden der ersten Papierlage und der zweiten Papierlage zu einer mehrlagigen Papierbahn,
- mehrstufige Entwässerung/Trocknung der mehrlagigen Papierbahn zu einer mehrlagigen Linerbahn, wobei durch die erste Papierlage eine Drucklage und durch die zweite Papierlage eine mit dieser Drucklage unmittelbar verbundene Trägerlage gebildet wird,
- optional Herstellung einer oder mehrerer weiterer Papierlagen und Verbinden zumindest einer dieser weiteren Papierlagen mit der Trägerlage,
- Konfektionierung der mehrlagigen Linerbahn.

Dabei ist vorgesehen, dass die erste Papierlage aus der ersten Pulpe mittels einer ersten Formeranordnung direkt auf einem Langsieb der ersten Formeranordnung gebildet wird, und dass die zweite Papierlage aus der zweiten Pulpe mittels einer zweiten Formeranordnung direkt auf die erste Papierlage gebildet wird, sodass die erste Papierlage und die zweite Papierlage zu der mehrlagigen Papierbahn verbunden werden.

Hier und im Folgenden ist unter dem Begriff Pulpe eine wässrige Suspension des jeweiligen Zellstoffes zu verstehen. Synonym können auch wie üblich andere Begriffe, wie etwa Faserstoffsuspension, Faserbrei, Faserstoff-Wasser-Suspension, Fasersuspension, Zellstoffsuspension etc. verwendet werden.

Wahlweise können der ersten und/oder der zweiten Pulpe zusätzlich zu den jeweiligen Zellstoffmaterialien auch noch übliche Hilfsstoffe beigemengt werden, sodass die zumindest zwei Papierlagen neben dem erster Zellstoff und dem zweiten Zellstoff auch noch Hilfsstoffe enthalten. Als Beispiele für Hilfsstoffe bzw. Additive seien Massestärke, PAC (Polyaluminiumchlorid), ASA (Alkyl Succinic Anhydride) oder andere Leimungsmittel, Nassfestmittel, Bentonit etc. genannt. Wie an sich bekannt kann ein Gewichtsanteil solcher Hilfschemikalien in den Pulpen hierbei gering sein.

Unter einem ungebleichten Zellstoffmaterial ist generell ein Zellstoffmaterial zu verstehen, welches im Zuge des Herstellungsprozesses der bedruckbaren, mehrlagigen Linerbahn nicht gebleicht wird.

Diese spezielle Anordnung der Siebpartie bewirkt, dass die mehrlagige Papierbahn, bzw. letztendlich die mehrlagige Linerbahn stets derart in der Papiermaschine geführt ist, dass die Drucklage - bei Betrachtung der Papiermaschine in vertikaler Richtung - unter der Trägerlage liegt bzw. geführt ist. So können keine oder zumindest lediglich geringe Verunreinigungen auf die Drucklage gelangen.

Des Weiteren kann es zweckmäßig sein, wenn die erste Papierlage mittels einer einen Hybridformer umfassenden ersten Formeranordnung gebildet wird.

Der Fachwelt ist bekannt, dass der Begriff Hybridformer eine Komponente einer Formeranordnung bezeichnet, welche ein Obersieb umfasst, sodass die erste Papierlage sowohl nach unten, durch das Langsieb bzw. Fourdrinier-Sieb, als auch nach oben durch den Hybridformer bzw. das Obersieb entwässert wird. Das hat den Vorteil, dass damit eine bessere Formation und damit einhergehend eine bessere Abdeckung erzielt werden kann.

Ferner kann vorgesehen sein, dass die erste Papierlage mit einer Entwässerungsrate von 190 L/s*m bis zu 220 L/s*m, bevorzugt von 200 L/s*m bis zu 220 L/s*m, entwässert wird. Das hat den Vorteil, dass damit eine bessere Formation und damit einhergehend eine bessere Abdeckung erzielt werden kann.

Darüber hinaus kann vorgesehen sein, dass die zweite Papierlage mittels einer als Gapformer ausgebildeten zweiten Formeranordnung gebildet wird. Der Fachwelt ist der Begriff Gapformer als Bestandteil einer Formeranordnung grundsätzlich geläufig. Der Einsatz eines Gapformers hat den Vorteil, dass damit eine besonders gute Entwässerung der zweiten Papierlage erzielt werden kann, sodass ein nachfolgendes Verbinden der Papierlagen zur mehrlagigen Papierbahn ohne den Transfer von Schmutzpartikeln erfolgen kann und zugleich eine gute Verbindung der Lagen erreicht werden kann. Ein weiterer Vorteil einer als Gapformer ausgebildeten zweiten Formeranordnung ist, dass die Papierbahn sofort zwischen zwei Formiersieben fixiert wird und somit besser entwässerbar ist. Darüber hinaus sind damit auch verbesserte Querprofile der Papierbahn im Hinblick auf Flächengewicht und Feuchte erzielbar, sodass sich eine Papiermaschinen mit einem Gapformer durch eine noch bessere Runability auszeichnet.

Vorteilhafterweise kann unmittelbar vor dem Verbinden der ersten Papierlage und der zweiten Papierlage eine Konsistenz der ersten Papierlage auf 8% bis 14%, bevorzugt auf 11% bis 12%, und eine Konsistenz der zweiten Papierlage auf 8% bis 14%, bevorzugt auf 11% bis 12%, eingestellt werden.

Diese Konsistenzen unmittelbar vor dem Verbinden der Papierlagen werden auch als Vergautschungskonsistenzen oder im Englischen als combining consistencies bezeichnet. Wie sich herausgestellt hat gelingt ein Verbinden der beiden Papierbahnen innerhalb der beiden angegebenen Trockengehalte besonders gut. In weiterer Folge kann auch eine sehr gute Haftung der Deckenlage und der Trägerlage aneinander in dem Papier für Verpackungen bereitgestellt werden. Im Besonderen kann eine Delamination der beiden Lagen wirksam hintangehalten werden. Bei den angegebenen Konsistenzen kann ein Transfer von etwaigen Schmutzpartikeln oder anderen Kontaminationen von der Trägerlage auf die aufgrund der besonderen Prozessführung darunterliegende Drucklage verhindert oder zumindest stark vermindert werden.

Gemäß einer Weiterbildung ist es möglich, dass die mehrlagige Papierbahn mittels einer Pressenpartie umfassend eine TriNip-Presse entwässert und/oder getrocknet wird, wobei eine Konsistenz der mehrlagigen Papierbahn auf 45% bis 54% eingestellt wird. TriNip-Pressen weisen vorteilhafterweise eine kompakte Bauweise auf.

Ferner kann es zweckmäßig sein, wenn die erste Papierlage direkt mit einer Zentralwalze der TriNip-Presse kontaktiert und geglättet wird. Der Vorteil dieser Anordnung ist, dass bei unten angeordneter Decklage in Kombination mit der TriNip Presse die Decklage bereits vorgeglättet werden kann und ein gegebenenfalls nachfolgender Kalander nur minimal belastet werden muss. Damit kann ein etwaiger Festigkeitsverlust geringgehalten werden. Die glatte Zentralwalze bzw. Glättungswalze, welche mit der Decklage in Berührung ist hat den Vorteil, dass dadurch keine zusätzliche Offsetpresse erforderlich ist. Das bringt Vorteile im Hinblick auf eine Energieeffizienz und die Runability.

Darüber hinaus kann vorgesehen sein, dass die mehrlagige Papierbahn durch einen ersten Walzenspalt, einen zweiten Walzenspalt und einen Schuhspalt geführt wird, wobei eine auf die mehrlagige Papierbahn wirkende Linienlast in dem ersten Walzenspalt von 70 kN/m bis 110 kN/m beträgt, in dem zweiten Walzenspalt von 100 kN/m bis 140 kN/m beträgt, und in dem Schuhspalt von 1000 kN/m bis 1400 kN/m beträgt.

Das hat den Vorteil, dass mittels einer flexiblen Linienlasteinstellung ein maximaler Trockengehalt nach der Presse erreicht werden kann, wobei gleichzeitig eine hohe Qualität der visuellen Erscheinung erzielbar ist.

Des Weiteren kann vorgesehen sein, dass die mehrlagige Papierbahn in einer Vortrocknungspartie getrocknet wird, wobei ausschließlich die erste Papierlage mit einem oder mehreren Trocknungszylindern kontaktiert wird.

Durch die Kontaktierung der ersten Papierlage der mehrlagigen Papierbahn mit den Trocknungszylindern kann eine besonders glatte und damit hochwertig bedruckbare Oberfläche hergestellt werden. Die Ausbildung der Vortrocknungspartie als sogenannte einreihige Vortrocknungspartie, bei welcher also nur eine Seite der Papierbahn, konkret nur die Oberfläche der ersten Papierlage kontaktiert bzw. getrocknet wird, ermöglicht besonders hohe Anlagengeschwindigkeiten bei gleichzeitig geringer Gefahr von Abrissen (im Fachjargon also eine gute Runability).

Vorteilhaft ist auch, wenn der ersten Pulpe ein Leimungsmittel in einer Menge von 0,5 kg/t bis 5 kg/t bezogen auf 100 Gew.% Gesamtmasse der Drucklage zugegeben wird. Der zweiten Pulpe wird bevorzugt kein Leimungsmittel zugegeben. Weiters kann in einem Oberflächenstärkeauftragsaggregat auf die erste Papierlage eine Stärke bzw. eine Stärkesuspension in einer Menge von 30 kg/t bis 60 kg/t bezogen auf 100 Gew.% Gesamtmasse der Drucklage aufgetragen werden, um eine Festigkeitssteigerung zu erzielen. Es kann auch zweckmäßig sein, wenn der ersten Pulpe ebenso eine Stärke bzw. eine Stärkesuspension zugegeben wird. Alternativ oder bevorzugt zusätzlich kann in dem Oberflächenstärkeauftragsaggregat auf die erste Papierlage ein Oberflächenleimungsmittel in einer Menge von 0,5 kg/t bis 5 kg/t bezogen auf 100 Gew.% Gesamtmasse der Drucklage aufgetragen werden.

Es kann auch sein, dass Stärke und/oder das Oberflächenleimungsmittel in dem Oberflächenstärkeauftragsaggregat beidseitig aufgetragen werden, also ebenso auf die äußere Oberfläche der zweiten Papierlage, respektive auf die äußere Oberfläche der Trägerlage. Auch hier haben sich die angegebenen Auftragsmengen, jedoch bezogen auf 100 Gew.% Gesamtmasse der Trägerlage als zweckmäßig erwiesen.

Bei dem Oberflächenstärkeauftragsaggregat kann es sich um eine Leimpresse bzw. um eine Filmpresse handeln. Dadurch können die Oberflächeneigenschaften der Linerbahn im Hinblick auf eine hohe Festigkeit bzw. auf einen hohen Streifenstauchwiderstands-Index und einen hohen Berstdruckindex weiter optimiert werden. Ein Leimungsmittel, insbesondere ASA, kann bei Zugabe zur ersten Pulpe zur Hydrophobierung der ersten Papierlage beitragen und kann bei oberflächlichem Auftrag zur Hydrophobierung der Oberfläche der beitragen, sodass deren Wasseraufnahmefähigkeit, respektive deren Cobb-60 Wert, erhöht werden. Durch die Reduktion des Wasseraufnahmefähigkeit durch Zugabe von ASA zur ersten Pulpe wird auch bewirkt, dass die Stärkeaufnahmefähigkeit der Drucklage verschlechtert wird. Überraschenderweise hat sich gezeigt, dass durch Zugabe von Leimungsmittel zur ersten Pulpe in den angegebenen Mengen, sowie durch eine Oberflächenleimung bzw. einen oberflächlichen Stärkeauftrag auf die erste Papierlage in den angegebenen Mengen, sowohl überaus gute Hydrophobierung, als auch eine sehr hohe Festigkeit und auch sehr gute Bedruckbarkeit erreicht werden kann.Entsprechend einer vorteilhaften Weiterbildung kann vorgesehen sein, dass die mehrlagige Papierbahn in einer Nachtrocknungspartie getrocknet wird, wobei die erste Papierlage mit einem oder mehreren Trocknungszylindern kontaktiert wird, oder wobei die die erste Papierlage und die zweite Papierlage mit einem oder mehreren Trocknungszylindern kontaktiert wird.

Bevorzugt umfasst die Nachtrocknungspartie eine oder mehrere einreihige Trocknungspartien, bei welchen lediglich die erste Papierlage bzw. deren Oberfläche mit den Trocknungszylindern kontaktiert wird und eine oder mehrere nachfolgende zweireihige Trocknungspartien, bei welchen beide Papierlagen, also die Oberfläche der zweiten Papierlage und auch die Oberfläche der ersten Papierlage kontaktiert werden. Dies kann in der gesamten Prozessführung der erste Schritt sein, bei welchem auch die zweite Papierlage mit einem Trocknungszylinder direkt in Kontakt kommt. Dadurch können etwaige trocknungsbedingte Längenänderungs- oder Schrumpfungseffekte - im Fachjargon als "curl" oder "curl control" bezeichnet - ausgeglichen werden.

Insbesondere kann es vorteilhaft sein, wenn die mehrlagige Papierbahn in einem Kalander, insbesondere in einem Soft Nip Kalander, geglättet wird, wobei die erste Papierlage mit einer beheizbaren Walze kontaktiert wird, wobei eine Temperatur der beheizbaren Walze von 50°C bis 100°C, bevorzugt von 60°C bis 80°C, beträgt und wobei eine auf die erste Papierlage wirkende Linienlast von 20 kN/m bis 100 kN/m, bevorzugt von 60°C bis 80°C, beträgt. Es ist auch denkbar, dass es sich bei dem Kalander um einen Hard-Nip, , Schuhkalander oder Metall-Band-Kalander handelt. Hierdurch kann im weitesten Sinne eine Güte der zum Bedrucken vorgesehenen Oberfläche verbessert werden, wodurch die Qualität von auf diese Oberfläche aufgebrachten Druckbildern weiter verbessern lässt. Diverse Stellparameter, beispielsweise Druck, Temperatur und Verweilzeit, beim Kalandrieren zur Erzielung jeweils gewünschter Oberflächeneigenschaften, beispielsweise Oberflächenrauheit, sind dem Durchschnittsfachmann grundsätzlich geläufig.

Obgleich sich die Kalandrierung der ersten Papierlage positiv auf die Bedruckbarkeit der Oberfläche der Drucklage auswirkt, bewirken hohe Kalandertemperaturen insbesondere in Kombination mit hohen Linienlasten gleichsam einen unerwünschten Festigkeitsverlust. Es hat sich herausgestellt, dass mit der beschriebenen Prozessführung mit im Wesentlichen untenliegender Druckschicht vergleichsweise geringe Kalandertemperaturen und geringe Linienlasten ausreichen.

Es kann besonders vorteilhaft sein, dass als erster Zellstoff ein gebleichtes, frisches Kurzfasermaterial bereitgestellt oder hergestellt wird, und dass als zweiter Zellstoff ein Recyclingfasermaterial bereitgestellt oder hergestellt wird, und dass die mehrlagige Linerbahn bezogen auf 100 Gew.% Gesamtmasse der mehrlagigen Linerbahn zu 20 Gew.% bis 60 Gew.% aus dem ersten Zellstoff und zu 40 Gew.% bis 80 Gew.% aus dem zweiten Zellstoff hergestellt wird.

Mit dem Begriff gebleichtes, frisches Kurzfasermaterial ist ein Zellstoff gemeint, welcher ausschließlich Frischfaser enthält, und welcher zumeist aus Hartholz gewonnen wird. Im Englischen wird hierfür auch der Begriff virgin bleached hardwood fibers verwendet.

Unter dem Begriff Recyclingfasermaterial bzw. Recyclingfaser-Zellstoffmaterial ist insbesondere ein durch Aufbereitung von bereits benutztem Altpapier (im Englischen auch old corrugated containers (OCC) genannt) gewonnenes Zellstoffmaterial zu verstehen. Recycling-fasermaterial ist in der ISO 4046-4:2016 begrifflich definiert. Unter dem Begriff Recyclingfasermaterial wird nicht ein im Zuge des Verfahrens zur Herstellung des Verpackungspapieres verworfenes bzw. verlorenes Zellstoffmaterial gemäß Definition in ISO 4046-3, im Fachjargon auch als broke bezeichnet, verstanden.

Mittels des angegebenen Verfahrens kann eine Linerbahn mit guter Bedruckbarkeit und gleichzeitig guten mechanischen Eigenschaften hergestellt werden. Dies obgleich der Verwendung eines hohen Anteils an Recyclingfasermaterial. Es kann auch eine Grammatur bzw. Schichtdicke der Drucklage geringgehalten werden, ohne einen Weißgrad der zum Bedrucken vorgesehenen Oberfläche der Drucklage zu sehr zu kompromittieren, wie dies nachstehend anhand entsprechender Werte der Linerbahn für Verpackungen noch näher erläutert wird. Insgesamt kann mittels des angegebenen Verfahrens ein Verpackungspapier bzw. ein Papier für Verpackungen mit guter Bedruckbarkeit, insbesondere beaufschlagbar mit Druckbildern hoher Qualität und Farbtreue hergestellt werden, welches zudem die Anforderungen für Verpackungspapiere hinsichtlich mechanischer Robustheit und Festigkeit erfüllt.

Gleichzeitig kann im Vergleich zur Herstellung vollständig gebleichter Linerbahnen die Last an Prozesschemikalien im Zuge des Verfahrens verringert werden. Aufgrund des verringerten Einsatzes von gebleichtem Zellstoffmaterial und der ermöglichten geringen Grammatur der Drucklage kann außerdem die Menge an eingesetzten Zellstoff insgesamt klein gehalten werden. Dies und der verringerte Chemikalien-Einsatz wirken sich konsequenterweise auch positiv hinsichtlich der Herstellungskosten für die Linerbahn aus.

Es hat sich gezeigt, dass sich die angegebenen Zellstoffmaterialien als besonders gut geeignet zur Herstellung eines Liners für Verpackungen mit gewünschten bzw. ausreichend guten Eigenschaften, insbesondere zum Erzielen guter mechanischer Eigenschaften bzw. ausreichend guter Festigkeiten und gleichzeitig guter Bedruckbarkeit erwiesen. Insbesondere weil für die Herstellung der Drucklage ausschließlich gebleichtes, frisches Kurzfasermaterial als erster Zellstoff eingesetzt wird, kann eine besonders gute Bedruckbarkeit und damit ein überaus hochwertiger Liner, hergestellt werden.

An dieser Stelle sei darauf hingewiesen, dass eine etwaige Rückführung von Ausschussmaterial bzw. broke (die Begriffe werden nachfolgend erläutert) zu der ersten Pulpe nicht dahingehend zu verstehen ist, dass die in weiterer Folge daraus hergestellte Drucklage Recyclingmaterial enthält, wenngleich es sich bei dem Ausschussmaterial nicht um gebleichtes, frisches Kurzfasermaterial im eigentlichen Sinne handelt.

Vorteilhafterweise wird die mehrlagige Linerbahn nach vollständiger Trocknung auf einen Endtrockengehalt von 91% bis 93% mit einem Flächengewicht von 70 g/m² bis 250 g/m² hergestellt, wobei die Drucklage mit einem Flächengewicht von 40 g/m² bis 75 g/m² hergestellt wird.

Entsprechende Flächengewichte bzw. Grammaturen können wie an sich bekannt durch Steuerung diverser Verfahrensparameter, wie etwa Konsistenzen in einem Konstantteil einer Papiermaschine, die auf den Stoffauflauf einer Papiermaschine aufgebrachte Mengen an Pulpe und Stoffauflauf-Konsistenz, Durchzugsgeschwindigkeiten in verschiedenen Bereichen einer Papiermaschine und so weiter eingestellt werden. Ein Papier mit den angegebenen Flächengewichten und Flächengewichtsverhältnissen hat sich als besonders gut geeignet erwiesen, gute mechanische Eigenschaften und gute Bedruckbarkeit zu kombinieren. Des Weiteren kann durch die angegebenen Maßnahmen insgesamt ein Papier für Verpackungen mit geringem Materialeinsatz aber dennoch guten Eigenschaften bereitgestellt werden.

Des Weiteren kann es zweckmäßig sein, wenn zur Bereitstellung oder Herstellung des zweiten Zellstoffs Altpapier ausgewählt aus einer Gruppe bestehend aus Altpapiersorten gemäß EN 643 mit der Bezeichnung 1.02, 1.04, 1.05 und/oder 4.01 eingesetzt wird. Diese Sorten haben sich als zugleich kostengünstige, respektive leicht verfügbare Rohstoffe erwiesen, mit denen in dem Verfahren dennoch eine gute Festigkeit, bei zugleich geringem Energie- und Wassereintrag in der Stoffaufbereitung erzielbar sind.

Ferner kann vorgesehen sein, dass der zweite Zellstoff in einer Zusammensetzung bezogen auf 100 Gew.% Gesamt-Trockenmasse des zweiten Zellstoffs von 30 Gew.% bis 70 Gew.% Langfasermaterial, von 20 Gew.% bis 60 Gew.% Kurzfasermaterial, und von 10 Gew.% bis 50 Gew.% Ausschussmaterial bereitgestellt oder hergestellt wird. Eine solche Zusammensetzung hat den Vorteil, dass damit ein Produkt mit guten Produkteigenschaften, insbesondere mit einer hohen Festigkeit erreicht werden kann.

Ein Synonym für Ausschussmaterial ist der englische Begriff broke. Ausschussmaterial bzw. broke bezeichnen ein im Zuge des Verfahrens zur Herstellung des Verpackungspapieres verworfenes bzw. verlorenes Zellstoffmaterial gemäß Definition in ISO 4046-3. Ausschussmaterial kann im Zuge der Herstellung der Linerbahn an verschiedenen Anlagenteilen anfallen, beispielsweise in der Siebpartie, der Pressenpartie, der Trocknungspartie usw. Üblicherweise wird Ausschussmaterial in den Prozess rückgeführt und kann sowohl der zweiten Pulpe, als auch der ersten Pulpe zugeführt werden. Bei dem rückgeführten Ausschussmaterial handelt es sich dabei nicht um Recyclingmaterial im eigentlichen Sinne, aber ebenso nicht um frisches Zellstoffmaterial.

Gemäß einer Weiterbildung ist es möglich, dass eine Konsistenz der ersten Pulpe auf 0,3% bis 1,0%, bevorzugt auf 0,4% bis 0,6%, eingestellt wird, und dass die erste Pulpe auf eine Temperatur von 40°C bis 55°C erwärmt wird.

Bevorzugt und auch verfahrensbedingt wird die erste Pulpe mit einer Temperatur hergestellt, welche höher ist als die Temperatur der zweiten Pulpe. Dies zum einen deshalb, da der gebleichte erste Zellstoff verfahrensbedingt durch den Herstellungsprozess erwärmt wird, und zum anderen deshalb, weil es durch den Mahlprozess in dem oder den Refinern üblicherweise zu einer hohen Wärmeentwicklung kommt. Eine zusätzliche, quasi aktive, Erwärmung, beispielsweise mittels Dampflanzen oder dergleichen, der ersten Pulpe ist daher vorteilhafterweise nicht mehr erforderlich.

Die Konsistenz der ersten Pulpe in ihrem Stoffauflauf, respektive in ihrer Headbox, -also vor der Bildung der ersten Papierlage in der Siebpartie und vor einem ersten Entwässerungsschritt - ist auch unter dem Begriff Stoffauflaufkonsistenz geläufig. Hierbei kann es auch sein, dass eine Siebwasserfraktion, welche nach einer ersten Entwässerung im Zuge der Bildung der ersten Papierbahn anfällt, im Kreislauf in die erste Pulpe rückgeführt wird.

Ferner kann es zweckmäßig sein, wenn eine Konsistenz der zweiten Pulpe auf 0,7% bis 1,3%, bevorzugt auf 0,9,% bis 1,1%, eingestellt wird, und dass die zweite Pulpe eine Temperatur von 35°C bis 45°C erwärmt wird.

Wie bereits erläutert, kann die Temperatur der zweiten Pulpe tendenziell geringer sein als die Temperatur der ersten Pulpe. Durch eine Kreislaufführung des Wassers zur Herstellung der zweiten Pulpe wird in diese prozessbedingt damit zwar Wärme eingebracht, diese fällt jedoch üblicherweise geringer aus als ein Wärmeeintrag bei der Herstellung der ersten Pulpe.

Die Konsistenz der zweiten Pulpe in ihrem Stoffauflauf, respektive in ihrer Headbox, -also vor der Bildung der zweiten Papierlage in der Siebpartie und vor einem ersten Entwässerungsschritt - ist auch unter dem Begriff Stoffauflaufkonsistenz geläufig.

Darüber hinaus kann vorgesehen sein, dass die zweite Papierlage vor dem Verbinden mit der ersten Papierlage zu der mehrlagigen Papierbahn entwässert wird, und dass eine bei der Entwässerung entfernte Siebwasserfraktion in die zweite Pulpe im Kreislauf geführt bzw. rückgeführt wird, wobei die Siebwasserfraktion vor der Rückführung in die zweite Pulpe mittels einer Verdünnungswasserregelung mit Wasser verdünnt wird.

Nach dem Verbinden der ersten Papierlage und der zweiten Papierlage, also bei einem Vergautschen, wird bevorzugt nur noch bzw. ausschließlich nach unten entwässert. Dies insbesondere unter Aufbringung von vergleichsweise hohem Unterdruck bzw. Vakuum. Die hierbei anfallende Siebwasserfraktion wird ebenso in die zweite Pulpe und explizit nicht in die erste Pulpe rückgeführt und somit zur Verdünnung der Trägerlage im Konstantteil verwendet. Nach dem Verbinden bzw. Vergautschen kann mittels unterdruck- bzw. vakuumunterstützter Entwässerung auch erreicht werden, dass keine oder kaum Verunreinigungen in die weiße Decklage migrieren.

Des Weiteren kann vorgesehen sein, dass ein Schopper-Riegler-Wert gemäß ISO 5267-1:2000 des ersten Zellstoffs vor der Herstellung der ersten Pulpe von 25 °SR bis 40 °SR, bevorzugt von 33 °SR bis 35 °SR, durch mechanische Bearbeitung eingestellt wird.

Ein entsprechendes Zellstoffmaterial hat sich als besonders gut geeignet zur Bildung des zweiten Zellstoffs und in weiterer Folge zur Bildung der Trägerlage der Linerbahn erwiesen. Je nach Ausgangs-Zellstoffmaterialien kann ein Zellstoff innerhalb des oben angegebenen Bereichs für den Schopper-Riegler-Wert wie an sich bekannt durch mechanische Mahlung und/oder Zerfaserung, insbesondere in sogenannten Refinern bewerkstelligt werden.

Gemäß einer besonderen Ausprägung ist es möglich, dass die mechanische Bearbeitung mit einem spezifischen Energieeintrag von 60 kWh/t bd bis 120 kWh/t bd, bevorzugt von 80 kWh/t bd bis 100 kWh/t bd, durchgeführt wird. Die Abkürzung bd bedeutet in diesem Kontext "bone dry" und ist dem Durchschnittsfachmann hinlänglich bekannt. Alternativ für "bone dry" ist auch die Bezeichnung "atro" für absolut trocken geläufig.

Des Weiteren kann es vorteilhaft sein, wenn dass das als zweiter Zellstoff bereitgestellte oder hergestellte Recyclingfasermaterial ein Langfasermaterial umfasst, welches vor bzw. im Zuge der Herstellung der zweiten Pulpe in einem Disperger dispergiert wird.

Eine Dispergierung des Recyclingfasermaterials, insbesondere eines Langfaser-Recyclingfasermaterials, hat sich als vorteilhaft erwiesen, um eine üblicherweise in Recyclingmaterial bzw. Altpapier enthaltene Schmutzfracht zu verkleinern. Die in dem Disperger wirkenden Scherkräfte bewirken ein Zerkleinern oder gar ein Zerstören der Schmutzpartikel. Dadurch kann die Qualität einer derart hergestellten Linerbahn erhöht werden, weil etwaige Schmutzpartikel oder Kontaminationen nicht von der Trägerlage in die Drucklage durchscheinen.

Insbesondere kann es vorteilhaft sein, wenn die erste Papierlage aus der ersten Pulpe mittels einer ersten Formeranordnung direkt auf einem Langsieb der ersten Formeranordnung gebildet wird, und dass die zweite Papierlage aus der zweiten Pulpe mittels einer zweiten Formeranordnung direkt auf die erste Papierlage gebildet wird, sodass die erste Papierlage und die zweite Papierlage zu der mehrlagigen Papierbahn verbunden werden.

Durch diese Anordnung bzw. Prozessführung wird bewirkt, dass die erste Papierlage bzw. letztendlich die aus dieser gebildete Drucklage bei Betrachtung einer Papiermaschine in vertikaler Richtung unter der zweiten Papierlage bzw. der letztendlich aus dieser gebildeten Trägerlage liegt.

Besonders bei dieser Prozessführung kann es vorteilhaft sein, wenn eine Konsistenz unmittelbar vor dem Verbinden der beiden Papierlagen, also eine Vergautschungskonsistenz derart hoch ist, dass etwaige Schmutzbestandteile oder Verunreinigungen nicht von der zweiten Papierlage auf die darunterliegende erste Papierlage übertragen werden können. Demnach hat sich insbesondere eine Vergautschungskonsistenz der zweiten Pulpe wie zuvor bereits beschrieben als vorteilhaft erwiesen.

Die Aufgabe der Erfindung wird auch durch einen bedruckbaren bzw. zum Bedrucken vorgesehenen, mehrlagigen Liner für Verpackungen bzw. Verpackungspapier gemäß den Ansprüchen gelöst.

Der Liner umfasst eine Drucklage überwiegend umfassend ein Cellulosefasern umfassendes, gebleichtes erstes Fasermaterial und eine mit der Drucklage unmittelbar verbundene Trägerlage überwiegend umfassend ein Cellulosefasern umfassendes, ungebleichtes zweites Fasermaterial.

Dabei ist vorgesehen, dass die Drucklage aus einer ersten Pulpe umfassend das erste Fasermaterial mittels einer ersten Formeranordnung direkt auf einem Langsieb der ersten Formeranordnung gebildet ist, und dass die Trägerlage aus einer zweiten Pulpe umfassend das zweite Fasermaterial mittels einer zweiten Formeranordnung direkt auf die Drucklage gebildet ist.

Insbesondere kann der Liner nach einem Verfahren gemäß den vorstehenden beschreibungsteilen hergestellt sein.

Dabei kann auch vorgesehen sein, dass das erste Fasermaterial durch ein gebleichtes, frisches Kurzfasermaterial gebildet ist, und dass das zweite Fasermaterial durch ein Recyclingfasermaterial gebildet ist, und dass der Liner bezogen auf 100 Gew.% Gesamtmasse des Liners, zu 20 Gew.% bis 60 Gew.% aus dem ersten Fasermaterial und zu 40 Gew.% bis 80 Gew.% aus dem zweiten Fasermaterial gebildet ist.

Durch diese Merkmale kann ein sehr gut bedruckbares Papier für Verpackungen bereitgestellt werden. Gleichzeitig kann ein Verpackungspapier mit guten mechanischen Eigenschaften bereitgestellt werden. Überaschenderweise kann auch eine Grammatur bzw. Schichtdicke der Deckenlage geringgehalten werden, ohne den Weißgrad der zum Bedrucken vorgesehenen Oberfläche der Deckenlage zu sehr zu kompromittieren. Dies wird nachstehend anhand entsprechender Werte des Papiers für Verpackungen noch näher erläutert.

Außerdem kann ein entsprechendes Verpackungspapier mittels eines Verfahrens wie obenstehend beschrieben hergestellt werden, welches Verfahren sich durch hohe Effizienz sowohl in ökologischer als auch ökonomischer Hinsicht auszeichnet. Um unnötige Wiederholungen zu vermeiden sei an dieser Stelle auch auf die vorausgegangenen Beschreibungsteile und die erläuterten Vorteile verwiesen.

Unter einem ungebleichten Fasermaterial ist ein Fasermaterial zu verstehen, welches im Zuge des Herstellungsprozesses des bedruckbaren, mehrlagigen Liners nicht gebleicht wurde bzw. aus einem ungebleichten Zellstoffmaterial resultiert.

Die Drucklage des Liners bzw. dessen nach außen weisende Oberfläche ist zum Bedrucken vorgesehen und bildet bei der Anwendung des Liners die außenseitige, zum Bedrucken vorgesehene Lage einer Verpackung. Ein weiterer, häufiger Einsatzfall des Liners für Verpackungen ist ein Aufbringen auf bzw. Verbinden mit anderen Primärverpackungen, wie etwa einem Verpackungskarton. Im Speziellen ist also eine Verwendung des Verpackungspapiers als bedruckbares Deckenpapier für Pappe- bzw. Kartonverpackungen etc. möglich. Gleichwohl ist der gegenständliche Liner als Bestandteil einer Sekundärverpackung oder alleinstehend als Sekundärverpackung geeignet, also als Verpackung oder Verpackungskomponente einer Verpackung ohne direkten Kontakt zu den verpackten Produkten.

Der Begriff Recyclingfasermaterial wurde bereits obenstehend im Zusammenhang mit dem erfindungsgemäßen Verfahren eingehend erörtert. Wie obenstehend sei auch bezüglich des Begriffs Recyclingfasermaterial auf die Definition gemäß ISO 4046-4:2016 verwiesen.

Darüber hinaus kann vorgesehen sein, dass die Drucklage einen Streifenstauchwiderstands-Index nach ISO 9895:2008 von 30 Nm/g bis 34 Nm/g aufweist, und/oder dass die Trägerlage einen Streifenstauchwiderstands-Index nach ISO 9895:2008 von 18 Nm/g bis 22 Nm/g aufweist. Damit ist jeweils die Maschinenbüttenfestigkeit der Drucklage bzw. der Trägerlage gemeint. Zur Messung der SCT-Werte werden jeweils Stoffproben aus den Maschinenbütten entnommen und zu Laborblättern verarbeitet. Diese Labor-Drucklage bzw. Labor-Trägerlage werden hinsichtlich ihrer Festigkeitspotentiale, insbesondere hinsichtlich ihrer SCT-Werte und auch Berst-Indizes getestet. Geläufig ist hierbei auch der Begriff "Faserpotential".

Der Streifenstauchwiderstands-Index (SCT-Index) gemäß ISO 9895:2008 stellt wie an sich bekannt den SCT-Wert bezogen auf das Flächengewicht. Bevorzugt erfolgt die Messung mit 120 g/m² Rapid Koethen Laborblättern. Dieser mechanische Kennwert ist bei Verpackungspapieren besonders wichtig, da der Streifenstauchwiderstand eines Papieres geeignet ist den bei Verpackungen häufig vorkommenden Belastungen entgegenzuwirken. Daher kann durch das angegebene Merkmal die Widerstandfähigkeit des Liners und damit auch der Verpackung, welche durch den Liner gebildet oder den Liner als Bestandteil umfasst, weiter verbessert werden.

Die angegebenen SCT-Werte der Drucklage sowie der Trägerlage können - wie dem Fachmann bekannt ist - natürlich nicht im Liner selbst gemessen werden. Vielmehr wird im Zuge der Herstellung der Linerbahn, wie obenstehend bereits beschrieben, aus der ersten Pulpe und aus der zweiten Pulpe im Zuge einer Qualitätskontrolle bzw. im Labor jeweils eine separate erste und eine zweite Papierbahn hergestellt, entwässert und getrocknet, und von diesen Papierbahnen folglich der SCT-Wert gemessen.

Vorteilhaft ist auch eine Ausprägung, gemäß welcher vorgesehen sein kann, dass der Liner einen Streifenstauchwiderstands-Index (SCT_{CD}-Index) nach ISO 9895:2008 von 16 Nm/g bis 25 Nm/g aufweist. Dabei steht CD für "cross direction", also für die Querrichtung, respektive für die quer zur Papierlaufrichtung (MD - "machine direction", Maschinenrichtung) laufenden Richtung in der Papiermaschine. Damit sind nicht wie oben beschrieben Labor-Werte, sondern die tatsächlich in der Papiermaschine erreichbaren Werte gemeint.

Gemäß einer Weiterbildung ist es möglich, dass ein Berstdruck-Index gemäß ISO 2758:2014 der Drucklage von 3,0 kPa*m²/g bis 3,8 kPa*m²/g beträgt, und/oder dass ein Berstdruck-Index gemäß ISO 2758:2014 der Trägerlage von 1,7 kPa*m²/g bis 2,3 kPa*m²/g beträgt. Damit sind wie oben beschrieben Labor-Werte gemeint.

Wie zuvor bereits beschrieben handelt es sich bei den angegebenen Berstdruck-Indizes nicht um Werte, welche im fertigen Liner gemessen werden können, sondern welche im Zuge der Herstellung gemessen werden. Konkret wird im Zuge der Herstellung der Linerbahn, wie obenstehend bereits beschrieben, aus der ersten Pulpe und aus der zweiten Pulpe jeweils eine separate erste und eine zweite Papierbahn hergestellt, entwässert und getrocknet, und von diesen Papierbahnen folglich der Berstdruck-Index gemessen.

Ferner kann es zweckmäßig sein, wenn ein Berstdruck-Index gemäß ISO 2758:2014 des Liners von 1,6 kPa*m²/g bis 2,5 kPa*m²/g beträgt. Damit sind nicht wie oben beschrieben Labor-Werte gemeint, sondern die tatsächlich in der Papiermaschine erreichbaren Werte.

Darüber hinaus kann vorgesehen sein, dass der Liner bei Beaufschlagung der Drucklage mit Wasser gemäß ISO 535:2014 einen Cobb-60 Wert von 30 g/m² bis 40 g/m² aufweist.

Durch dieses Merkmal kann die Bedruckbarkeit des Liners verbessert werden. Im Speziellen kann die Aufnahme von üblichen, wasserbasierten Farben und deren Trocknung auf dem Liner verbessert werden, und kann so insbesondere ein unerwünschtes Durchschlagen der Druckfarbe hintangehalten werden. Der Cobb-60 Wert kann hierbei wie an sich bekannt primär durch die eingesetzten Materialien beeinflusst werden, insbesondere auch durch die Verwendung von Additiven, wie etwa Leimungsmitteln, beispielsweise Alkenyl-succinsäure Anhydrid (ASA).

Des Weiteren kann vorgesehen sein, dass als zweites Fasermaterial Altpapier ausgewählt ist aus einer Gruppe bestehend aus Altpapiersorten gemäß EN 643 mit der Bezeichnung 1.02, 1.04, 1.05 und/oder 4.01.

Gemäß einer besonderen Ausprägung ist es möglich, dass das zweite Fasermaterial in einer Zusammensetzung bezogen auf 100 Gew.% Gesamt-Trockenmasse des zweiten Fasermaterials von 30 Gew.% bis 70 Gew.% Langfasermaterial, von 20 Gew.% bis 60 Gew.% Kurzfasermaterial, und von 10 Gew.% bis 50 Gew.% Ausschussmaterial gebildet ist.

Entsprechend einer vorteilhaften Weiterbildung kann vorgesehen sein, dass der Liner ein Flächengewicht von 70 g/m² bis 250 g/m² aufweist, wobei die Drucklage ein Flächengewicht von 40 g/m² bis 75 g/m² aufweist.

Ein Papier mit den angegebenen Flächengewichten und Flächengewichtsverhältnissen hat sich als besonders gut geeignet erwiesen, gute mechanische Eigenschaften und gute Bedruckbarkeit zu kombinieren. Überraschend ist hierbei, dass das Flächengewicht bzw. die Grammatur der Drucklage derart niedrig gehalten werden kann, und dennoch eine gute Bedruckbarkeit bereitgestellt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel von Verfahrensschritten zur Herstellung einer ersten Pulpe 2 und einer zweiten Pulpe 5 in einer Stoffaufbereitungsanlage 24;
- Fig. 2: ein Ausführungsbeispiel von Verfahrensschritten zur Herstellung einer bedruckbaren, mehrlagigen Linerbahn 1 für Verpackungen in einer Papiermaschine 25;
- Fig. 3: ein Ausführungsbeispiel eines bedruckbaren, mehrlagigen Liners 21 für Verpackungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

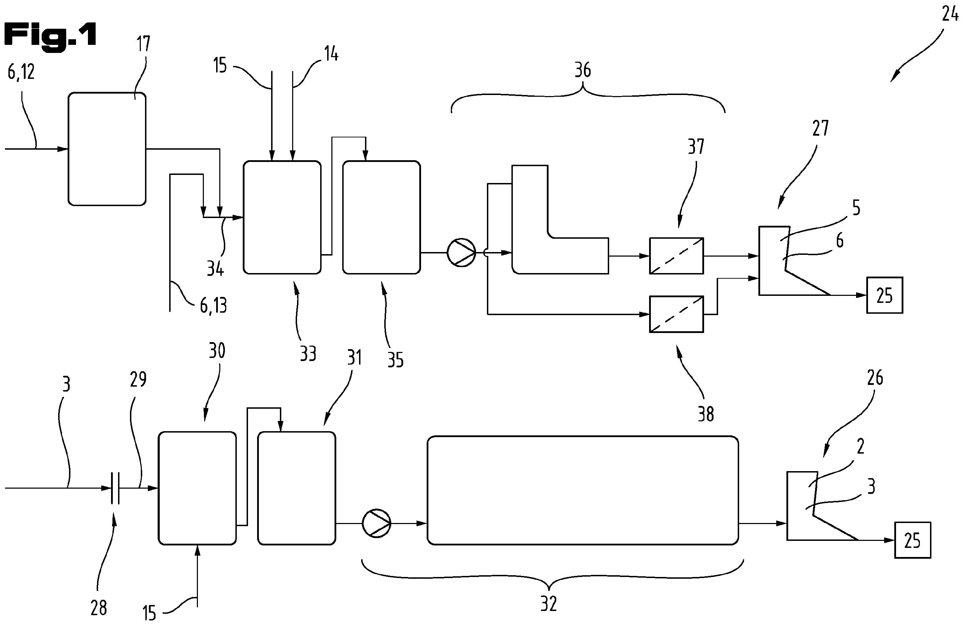

Um unnötige Wiederholungen zu vermeiden, werden die Figuren 1, 2 und 3 weitgehend in einer Zusammenschau beschrieben, wobei für gleiche Teile gleiche Bezugszeichen bzw. Bauteilbezeichnungen verwendet werden. Obgleich dies dem Fachmann klar ist, wird an dieser Stelle darauf hingewiesen, dass die Figuren lediglich beispielhaft und stark schematisch eine mögliche Prozessführung und mögliche vorhandene Anlagenbestandteile zeigen, und dass selbstverständlich auch alternative Anordnungen und weitere nicht gezeigte und in der Papierherstellung übliche Anlagenkomponenten und Prozessschritte denkbar sind.

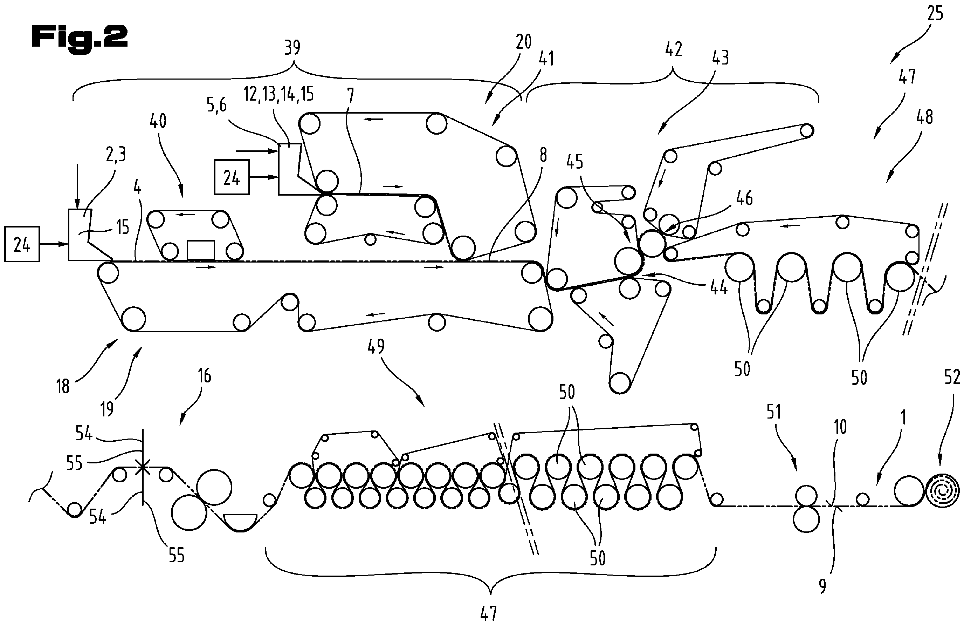

Das Verfahren zur Herstellung der Linerbahn 1 bzw. des Liners 21 kann grundsätzlich mit an sich üblichen Verfahrensschritten mittels einer Stoffaufbereitungsanlage 24 umfassend einen sogenannten Konstantteil bzw. mittels einer Papiermaschine 25 durchgeführt werden. Die Fig. 1 und Fig. 2 zeigen in ihrer Zusammenschau ein Verfahren zur Herstellung einer bedruckbaren, mehrlagigen Linerbahn 1 für Verpackungen. Da die in einer Stoffaufbereitungsanlage 24 bzw. auf einer Papiermaschine 25 durchgeführten Verfahrensschritte dem Durchschnittsfachmann grundsätzlich hinlänglich bekannt sind, kann eine detaillierte Beschreibung dieser grundlegenden Verfahrensschritte hier und im Folgenden erübrigt werden, und werden diese grundlegenden Verfahrensschritte im Folgenden lediglich erwähnt. Der gegenständliche Liner 21 für Verpackungen kann mittels in der Papierherstellung an sich üblichen Parametern hergestellt werden. Im Folgenden wird lediglich auf Besonderheiten in der Verfahrensführung bzw. Maschinenanordnung eingegangen.

Da das Produkt dieses Herstellungsverfahrens zumindest zwei Papierlagen 4, 7 aufweist, umfasst das Verfahren eine Bereitstellung oder Herstellung eines Cellulosefasern umfassenden, gebleichten ersten Zellstoff 3 sowie eine Bereitstellung oder Herstellung eines Cellulosefasern umfassenden, ungebleichten zweiten Zellstoffs 6. Dementsprechend folgt wie bei der Papierherstellung auf einer Papiermaschine üblich eine Herstellung einer ersten Papierlage 4 umfassend den gebleichten, ersten Zellstoff 3 und eine Herstellung einer zweiten Papierlage 7 umfassend den zweiten Zellstoff 6.

Die diesbezüglichen Zusammenhänge sind dem Durchschnittsfachmann auf dem Gebiet der Papierherstellung geläufig. Wie an sich bekannt kann eine entsprechende Herstellung solcher Zellstoffmaterialien durch Zerkleinerung von entsprechenden Hölzern und mechanischen und/oder chemischen Aufschluss zur Entfernung von Ligninanteilen, Hemicellulosen-Anteilen und weiteren Holzbestandteilen, sowie allfälligen weiteren Bearbeitungsmethoden wie mechanischen Nachbehandlungen, zum Beispiel Nass-Mahlung bzw. Nass-Zerfaserung in sogenannten Refinern, erfolgen.

Hierzu erfolgt zunächst wie in der in Fig. 1 schematisch dargestellten Stoffaufbereitungsanlage 24 eine Herstellung einer ersten Pulpe 2 umfassend den Cellulosefasern umfassenden, gebleichten ersten Zellstoff 3, sowie eine Herstellung einer zweiten Pulpe 5 umfassend den Cellulosefasern umfassenden, ungebleichten zweiten Zellstoff 6. Nach deren Herstellung wird die erste Pulpe 2 in einen ersten Stoffauflauf26 und die zweite Pulpe 5 in einen zweiten Stoffauflauf 27 gefördert. Als alternativen Begriff wird für Stoffauflauf 26, 27 auch der Terminus Headbox verwendet. Hierzu können die beiden Zellstoffe wie an sich bekannt in wässriger Flüssigkeit suspendiert werden. Der Vollständigkeit halber sei an dieser Stelle definiert, dass unter dem Begriff Pulpe eine wässrige Suspension des jeweiligen Zellstoffes zu verstehen ist. Synonym können auch wie üblich andere Begriffe, wie etwa Faserbrei, Faserstoff-Wasser-Suspension, Fasersuspension, Zellstoffsuspension etc. verwendet werden.

Unter dem im Zusammenhang mit der Herstellung der ersten Pulpe 2 verwendeten Begriff Kurzfasermaterial bzw. Kurzfaser-Zellstoffmaterial kann insbesondere ein aus Harthölzern gewonnenes Zellstoffmaterial verstanden werden, welches sich durch kurze mittlere Faserlängen der Cellulosefasern auszeichnet. Vorzugsweise können als Kurzfasermaterial sogenannte Kraft-Zellstoffmaterialien bereitgestellt oder hergestellt werden, also mittels dem Kraft-Verfahren bzw. Kraft-Aufschluss hergestellte Zellstoffmaterialien. Solche Kraft-Zellstoffe werden häufig auch als Sulfat-Zellstoffmaterialien bezeichnet.

Der Vorgang des Bleichens zur Herstellung gebleichter Zellstoffmaterialien umfasst wie dem Durchschnittsfachmann bekannt einen weiteren chemischen Aufschluss zur zumindest weitgehenden Entfernung von Rest-Lignin und anderen färbenden Substanzen und ist in der Fig. 1 nicht gezeigt. Ein entsprechendes Bleichen ist hierbei sowohl zur Entfernung von Rest-Lignin, aber grundsätzlich auch zur Entfernung färbender Substanzen beispielsweise aus Recycling-Zellstoffmaterial geeignet.

Wie bereits obenstehend erwähnt können je nach Bedarf oder Einsatzzweck der mehrlagigen, bedruckbaren Linerbahn 1 im Zuge deren Herstellung natürlich auch weitere in der Papierherstellung übliche Hilfsstoffe bzw. Additive, wie etwa modifizierte oder native Stärke, Leimungsmittel 15, Retentionsmittel, Fixiermittel, Nassfestmittel usw. beigemengt bzw. verwendet werden.

Bevorzugt handelt es sich bei dem Cellulosefasern umfassenden, gebleichten ersten Zellstoff 3 um gebleichtes, frisches Kurzfasermaterial, insbesondere um gebleichtes, frisches Hartholzfasermaterial. Insbesondere kann es bei dem Verfahren zweckmäßig sein, wenn der erste Zellstoff 3 mit einem Schopper-Riegler-Wert gemäß ISO 5267-1:2000 von 25 °SR bis 40 °SR, bevorzugt von 33 °SR bis 35 °SR, bereitgestellt oder hergestellt wird. Dies kann durch Aufbereitung des ersten Zellstoffes 3 zum Beispiel durch mechanische Mahlung bzw. Zerfaserung in einem oder mehreren Refinern 28 bewerkstelligt werden. Bevorzugt wird die mechanische Bearbeitung mit einem spezifischen Energieeintrag von 60 kWh/t bd bis 120 kWh/t bd, bevorzugt von 80 kWh/t bd bis 100 kWh/t bd, durchgeführt. Nach dem oder den Refinern 28 kann ein erster Stoffstrom 29 bzw. stockflow zur Herstellung der ersten Pulpe 2 umfassend den ersten Zellstoff 3 in eine ersten Mischbütte 30 und in einer dieser ersten Mischbütte 30 nachfolgenden ersten Maschinenbütte 31 homogenisiert werden. Aus der ersten Maschinenbütte 31 wird der erste Stoffstrom 29 in eine Verdünnungs- und Reinigungsanlage 32 gefördert bzw. gepumpt. Aus dieser Verdünnungs- und Reinigungsanlage 32 wird der erste Stoffstrom 29 als nunmehr erste Pulpe 2 in den ersten Stoffauflauf26 bzw. die erste Headbox, gepumpt. In der Verdünnungs- und Reinigungsanlage 32 kann eine erste Verdünnung der Faserstoffsuspension erfolgen, an diese eine Reinigungsanlage, beispielsweise eine Cleaneranlage mit Hydrozyklonen, anschließen kann. Anschließend kann das sogenannte Akzept zweites Mal verdünnt und in einer Siebanlage, beispielsweise in einem als Vertikalsichter ausgebildeten Maschine Screen gereinigt werden. Zuletzt kommt das Akzept zum ersten Stoffauflauf 26. Der in der Fig. 1 ist die Verdünnungs- und Reinigungsanlage 32 grob schematisch als Black-Box dargestellt, wobei die Verdünnungs- und Reinigungsanlage 32 unter anderem die beschriebenen Anlagenteile umfassen kann.

Parallel dazu erfolgt die Herstellung einer zweiten Pulpe 5 umfassend den zweiten Zellstoff 6. Als zweiter Zellstoff 6 wird ein Recyclingfasermaterial bereitgestellt oder hergestellt. Zur Bereitstellung oder Herstellung des zweiten Zellstoffs 6 kann Altpapier ausgewählt aus einer Gruppe bestehend aus Altpapiersorten gemäß EN 643 mit der Bezeichnung 1.02, 1.04, 1.05 und/oder 4.01 eingesetzt werden. Dabei werden bevorzugt Langfaser-Recyclingfasermaterial 12, Kurzfaser-Recyclingfasermaterial 13, sowie optional eine Ausschussmaterial 14 in einer zweiten Mischbütte 33 bzw. mixing chest in einem einstellbaren Verhältnis vermischt. Bevorzugt wird der der zweite Zellstoff 6 in einer Zusammensetzung bezogen auf 100 Gew.% Gesamt-Trockenmasse des zweiten Zellstoffs 6 von 30 Gew.% bis 70 Gew.% Langfaser-Recyclingfasermaterial 12, von 20 Gew.% bis 60 Gew.% Kurzfaser-Recyclingfasermaterial 13, und von 10 Gew.% bis 50 Gew.% Ausschussmaterial 14 bereitgestellt oder hergestellt.

Langfaser-Recyclingfasermaterial 12 enthält oftmals einen unerwünscht hohen Anteil an Verschmutzungen bzw. an Schmutzpartikeln, weshalb das Langfaser-Recyclingfasermaterial 12 zur Aufbereitung vorab in einem oder mehreren Dispergern 17 dispergiert wird. Beispielsweise wird das Langfaser-Recyclingfasermaterial 12 bzw. die darin enthaltenen Verunreinigungen in einem mehrstufigen Prozess umfassend Scheibenfilter unter Einfluss von Scherkräften zerkleinert. Der Begriff Ausschussmaterial 14 bezeichnet dabei einen aus einem oder mehreren Verfahrensschritten bzw. Anlagenteilen der Stoffaufbereitungsanlage 24 und/oder Papiermaschine 25 rückgeführten, Zellstoff-enthaltenden Stoffstrom. Nach der Durchmischung bzw. Homogenisierung des zweiten Stoffstroms 34 in der zweiten Mischbütte 33 wird der zweite Stoffstrom 34 in eine zweite Maschinenbütte 35 gefördert. Aus der zweiten Maschinenbütte 35 wird der zweite Stoffstrom 34 mittels einer zweiten Verdünnungs- und Reinigungsanlage 36 umfassend einen Maschinenfilter 37, beispielsweise einen Vertikalsichter, und einen Verdünnungsfilter 38, beispielsweise einen Vertikalsichter, gereinigt, verdünnt bzw. in wässriger Flüssigkeit suspendiert, und in einen zweiten Stoffauflauf 27 bzw. eine zweite Headbox gefördert. Eine anfängliche Konsistenz, also Stoffauflaufkonsistenz, der ersten Pulpe 2 kann auf 0,3% bis 1,0%, bevorzugt auf 0,4% bis 0,6%, eingestellt sein, und die erste Pulpe 2 kann auf eine Temperatur von 40°C bis 55°C erwärmt sein. Eine anfängliche Konsistenz, also Stoffauflaufkonsistenz, der zweiten Pulpe 5 kann auf 0,7% bis 1,3%, bevorzugt auf 0,9,% bis 1,1%, eingestellt sein, und die zweite Pulpe 5 kann auf eine Temperatur von 35°C bis 45°C erwärmt sein. Bevorzugt ist dabei die Temperatur der ersten Pulpe 2 höher, als die Temperatur der zweiten Pulpe 5.

Bevorzugt erfolgen sämtliche Verfahrensschritte zur Herstellung der Linerbahn 1 in einer Gesamtanlage umfassend die Stoffaufbereitungsanlage 24 zur Herstellung der beiden Pulpen 2, 5 und die Papiermaschine 25 zur Herstellung der Linerbahn 1 aus den beiden Pulpen 2, 5. Bevorzugt erfolgt dabei die Zellstofferzeugung bzw. die Herstellung der beiden Pulpen 2, 5 parallel bzw. gleichzeitig, wobei die Pulpen 2, 5 quasi in einem inline-Prozess bzw. in einem integrierten Prozess zu einer Linerbahn 1 verarbeitet werden.

Wie in der Papierherstellung ebenfalls üblich können der ersten Pulpe 2, der zweiten Pulpe 5 oder beiden Pulpen zusätzlich zu den jeweiligen Zellstoffen auch noch weitere Hilfsstoffe zugegeben werden. Als Beispiele für solche Hilfsstoffe seien Massestärke, PAC (Polyaluminiumchlorid) oder Alaun, ASA (Alkyl Succinic Anhydride) oder andere Leimungsmittel, Bentonit oder Talkum, pH-Stellmittel, Retentionsmittel etc. genannt. Die Auswahl der Art und Menge solcher Hilfsstoffe kann von einem Durchschnittsfachmann auf dem technischen Gebiet zum Beispiel anhand gewünschter Detail-Eigenschaften der mehrlagigen Linerbahn 1 und/oder auch angepasst an eine bestimmte Ausgestaltung einer Papiermaschine bzw. angepasst an eine bestimmte Verfahrensführung, erfolgen.

Bevorzugt wird der ersten Pulpe 2 ein Leimungsmittel 15, insbesondere ASA, in einer Menge von 0,5 kg/t bis 5 kg/t bezogen auf 100 Gew.% Gesamtmasse der Drucklage 9 zugegeben. Auf die erste Papierlage 4 wird in einer der Stoffaufbereitungsanlage 24 nachfolgenden Papiermaschine 25 mittels eines Oberflächenstärkeauftragsaggregats 16 eine Stärke 54 bzw. eine Stärkesuspension in einer Menge von 30 kg/t bis 60 kg/t bezogen auf 100 Gew.% Gesamtmasse der Drucklage 9 aufgetragen. Alternativ oder zusätzlich kann in dem Oberflächenstärkeauftragsaggregat 16 auf die erste Papierlage 4 ein Oberflächenleimungsmittel 55 in einer Menge von 0,5 kg/t bis 5 kg/t bezogen auf 100 Gew.% Gesamtmasse der Drucklage 9 aufgetragen werden.

Es kann auch sein, dass Stärke 54 und/oder das Oberflächenleimungsmittel 55 in dem Oberflächenstärkeauftragsaggregat 16 beidseitig aufgetragen werden, also ebenso auf die äußere Oberfläche der zweiten Papierlage 7, respektive auf die äußere Oberfläche der Trägerlage 10. Auch hier haben sich die angegebenen Auftragsmengen, jedoch bezogen auf 100 Gew.% Gesamtmasse der Trägerlage 10, als zweckmäßig erwiesen.

In der Fig. 2 sind Verfahrensschritte zur Herstellung einer bedruckbaren, mehrlagigen Linerbahn 1 für Verpackungen in einer Papiermaschine 25 gezeigt. Idealerweise schließt die Papiermaschine 25 direkt an die Stoffaufbereitungsanlage 24. Um dies zu veranschaulichen, beginnt das in der Fig. 2 dargestellte Verfahren mit den beiden Stoffaufläufen 26, 27, mit denen das in der Fig. 1 dargestellte Verfahren endet.

Die mittels der Stoffaufbereitungsanlage 24 und der nachfolgenden Papiermaschine 25 hergestellte Linerbahn 1 hat bezogen auf 100 Gew.% Gesamtmasse der mehrlagigen Linerbahn 1, eine Zusammensetzung von 40 Gew.% bis 60 Gew.% aus dem ersten Zellstoff 3, also aus gebleichtem, frischem Kurzfasermaterial, und zu 40 Gew.% bis 60 Gew.% aus dem zweiten Zellstoff 6, also aus Recyclingfasermaterial.

Die erste Pulpe 2 und die zweite Pulpe 5 können aus ihrem jeweiligen Stoffauflauf 26, 27 auf eine Siebpartie 39 bzw. auf eine Formeranordnung einer Papiermaschine 25 ein- bzw. aufgebracht werden. Wie dem Durchschnittsfachmann hinlänglich bekannt ist, erfolgt in einer Papiermaschine üblicherweise eine Bildung einer Papierlage durch sukzessive Entwässerung und Trocknung einer über einen Stoffauflauf eingebrachten Pulpe. Eine Papierlage kann zum Beispiel in einem ersten Entwässerungsschritt mittels einer sogenannten Siebpartie gebildet und zumindest eingedickt werden, wobei eine weitere Trocknung einer gebildeten Papierlage in einer Papiermaschine in weiteren Trocknungsschritten erfolgen kann.

Dementsprechend ist bei dem gegenständlichen Verfahren auch eine Herstellung bzw. Bildung einer ersten Papierlage 4 durch Entwässerung/Trocknung der ersten Pulpe 2 , sowie eine Herstellung bzw. Bildung einer zweiten Papierlage 7 durch Entwässerung/Trocknung der zweiten Pulpe 5 vorgesehen.

Die zweite Papierlage 7 kann vor dem Verbinden mit der ersten Papierlage 4 zu der mehrlagigen Papierbahn 8 entwässert werden, und eine bei dieser Entwässerung entfernte Siebwasserfraktion kann in die zweite Pulpe 5 rückgeführt werden, wobei die Siebwasserfraktion mittels einer Verdünnungswasserregelung mit Wasser verdünnt wird. Diese Rückführung ist dem Fachmann grundsätzlich geläufig und nicht figürlich gezeigt.

Zur Herstellung der mehrlagigen Linerbahn 1 für Verpackungen ist natürlich auch ein Verfahrensschritt zum Verbinden der ersten Papierlage 4 und der zweiten Papierlage 7 zu einer mehrlagigen Papierbahn 8 vorgesehen. Ein solches Verbinden kann grundsätzlich bei unterschiedlichen Trocknungsgraden bzw. Konsistenzen der der ersten Papierlage 4 und der zweiten Papierlage 7, also auch zum Beispiel an unterschiedlicher Stelle in einer Papiermaschine bzw. beispielsweise nach oder im Zuge unterschiedlicher Entwässerungs- bzw. Trocknungsstufen in einer Papiermaschine erfolgen. Bevorzugt erfolgt das Verbinden der Papierlagen jedoch in der Siebpartie 39. Dementsprechend ist auch bei dem gegenständlichen Verfahren ein Verbinden bzw. Vergautschen der ersten Papierlage 4 und der zweiten Papierlage 7, zur Bildung einer mehrlagigen Papierbahn 8 vorgesehen. Bevorzugt wird unmittelbar vor dem Verbinden der ersten Papierlage 4 und der zweiten Papierlage 7 eine Vergautschungskonsistenz der ersten Papierlage 4 auf 8% bis 14%, bevorzugt auf 11% bis 12%, und eine Vergautschungskonsistenz der zweiten Papierlage 7 auf 8% bis 14%, bevorzugt auf 11% bis 12%, eingestellt.

Üblicherweise erfolgt im Anschluss an das Verbinden der Papierlagen zu einer mehrlagigen Papierbahn 8 eine mehrstufige Entwässerung/Trocknung der mehrlagigen Papierbahn 8 zu einer mehrlagigen Linerbahn 1. Bei der mehrlagigen Linerbahn 1 wird durch die erste Papierlage 4 eine Drucklage 9 und durch die zweite Papierlage 7 eine mit dieser Drucklage 9 unmittelbar verbundene Trägerlage 10 gebildet. Als letzten Verfahrensschritt erfolgt zweckmäßigerweise ein Aufwickeln der mehrlagigen Linerbahn 1, sowie eine Konfektionierung der mehrlagigen Linerbahn 1 zu einem Liner 21.

Die erste Papierlage 4 wird wie in der Fig. 2 gezeigt in der Siebpartie 39 bzw. am Ende der Siebpartie 39 aus der ersten Pulpe 2 mittels einer ersten Formeranordnung 18 direkt auf einem Langsieb 19 der ersten Formeranordnung 18 gebildet, und die zweite Papierlage 7 wird aus der zweiten Pulpe 5 mittels einer zweiten Formeranordnung 20 direkt auf die erste Papierlage 4 gebildet, sodass die erste Papierlage 4 und die zweite Papierlage 7 zu der mehrlagigen Papierbahn 8 verbunden werden. Die Lagebezeichnung "auf" bezieht sich dabei auf eine Betrachtung der Papiermaschine 25 in vertikaler Richtung.

Die erste Papierlage 4 wird mittels einer einen Hybridformer 40 umfassenden ersten Formeranordnung 18 gebildet. Dabei wird die erste Papierlage 4 bevorzugt mit einer Entwässerungsrate von 190 L/s*m bis zu 220 L/s*m, bevorzugt von 200 L/s*m bis zu 220 L/s*m, entwässert. Die zweite Papierlage 7 wird mittels einer als Gapformer 41 ausgebildeten zweiten Formeranordnung 20 gebildet.

Bei dem in Fig. 2 dargestellten Ausführungsbeispiel kann das Verbinden der ersten Papierlage 4 und der zweiten Papierlage 7 durch Aneinanderpressen der Papierlagen 4, 7 mittels Gautschwalzen oder Presswalzen erfolgen. Wie weiters anhand des Ausführungsbeispiels der Fig. 2 veranschaulicht, werden die Papierlagen 4, 7 zu einer mehrlagigen Papierbahn 8 derart verbunden, dass durch die erste Papierlage 4 eine Drucklage 9 und durch die zweite Papierlage 7 eine mit dieser Drucklage 9 unmittelbar verbundene Trägerlage 10 bzw. Stützlage der mehrlagigen Papierbahn 8 gebildet wird.

Ganz grundsätzlich ist optional auch eine Herstellung einer oder mehrerer weiterer Papierlagen 11 und deren Verbinden zu der mehrlagigen Papierbahn 8 möglich, wobei zumindest eine diese weiteren Papierlagen 11 gegebenenfalls mit der Trägerlage 10 zur Ausbildung einer mehrlagigen Papierbahn 8 bzw. Linerbahn 1 zu verbinden ist. Diese Option ist in Fig. 2 nicht aus Gründen der Übersichtlichkeit nicht dargestellt, ist jedoch für den Durchschnittsfachmann auf dem Gebiet der Papierherstellung selbsterklärend. Weitere Papierlagen 11 zur Bildung der mehrlagigen Linerbahn 1 können je nach Verwendungszweck bzw. Anforderungen zweckmäßig sein, ein lediglich zweilagiger Liner 21 und damit die Bildung einer zweilagigen Papierbahn 8 zu dessen Herstellung wie in den Figuren schematisch veranschaulicht, kann in den meisten Fällen allerdings völlig ausreichend und aus Gründen der Materialersparnis und hinsichtlich möglichst einfacher Verfahrensführung auch gewünscht sein.

Unabhängig von der Anzahl an zur mehrlagigen Papierbahn 8 verbundenen Papierlagen 4, 7, 11 kann nach dem Verbinden eine weitere Trocknung dieser Papierbahn 8, zum Beispiel in nachfolgenden Stufen der in Fig. 2 dargestellten Pressenpartie 42 erfolgen. Die mehrlagige Papierbahn 8 kann mittels einer Pressenpartie 42 umfassend eine TriNip-Presse 43 entwässert und/oder getrocknet werden, wobei eine Konsistenz der mehrlagigen Papierbahn 8 auf 45% bis 54% eingestellt werden kann. Der grundsätzliche Aufbau und die Funktionsweise einer TriNip-Presse 43 ist der Fachwelt bekannt. Die erste Papierlage 4 kann bevorzugt direkt mit einer Zentralwalze der TriNip-Presse 43 kontaktiert und geglättet werden. Die mehrlagige Papierbahn 8 kann durch einen ersten Walzenspalt 44, einen zweiten Walzenspalt 45 und einen Schuhspalt 46 geführt werden, wobei eine auf die mehrlagige Papierbahn 8 wirkende Linienlast in dem ersten Walzenspalt 44 von 70 kN/m bis 110 kN/m beträgt, in dem zweiten Walzenspalt 45 von 100 kN/m bis 140 kN/m beträgt, und in dem Schuhspalt 46 von 1000 kN/m bis 1400 kN/m betragen kann.

Folgend auf eine Pressenpartie 42 kann wie bekannt noch eine Endtrocknung mittels einer sogenannten Trockenpartie 47 zur gewünschten Endfeuchte durchgeführt werden. Dabei kann es vorteilhaft sein, wenn die Trockenpartie 47 eine Vortrocknungspartie 48 und eine Nachtrocknungspartie 49 umfasst, und dass zwischen der Vortrocknungspartie 48 und der Nachtrocknungspartie 49 ein Oberflächenstärkeauftragsaggregat 16 angeordnet ist. Die mehrlagige Papierbahn 8 wird in einer Vortrocknungspartie 48 getrocknet, wobei ausschließlich die erste Papierlage 4 mit einem oder mehreren Trocknungszylindern 50 kontaktiert wird. Die Vortrocknungspartie 48 ist somit wie dargestellt bevorzugt als einreihige Vortrocknungspartie 48 ausgebildet.

Die mehrlagige Papierbahn 8 wird in einer Nachtrocknungspartie 49 getrocknet, wobei die erste Papierlage 4 mit einem oder mehreren Trocknungszylindern 50 kontaktiert wird, oder wobei die die erste Papierlage 4 und die zweite Papierlage 7 mit einem oder mehreren Trocknungszylindern 50 kontaktiert wird. In der Fig. 2 ist die Nachtrocknungspartie 49 beispielhaft zweireihig ausgebildet. Sie umfasst einen ersten einreihigen Abschnitt mit Trocknungszylindern 50, welche die erste Papierlage 4 kontaktieren, gefolgt von einer zweireihigen Trockengruppe zur Curl Control, in welcher zweireihigen Trockengruppe beide Seiten, also jeweils die erste Papierlage 4 und die zweite Papierlage 7 mit Trocknungszylindern 50 kontaktiert werden.

Nach der Trockenpartie 47, respektive nach dem Nachtrocknungspartie 49 der Trockenpartie 47 kann bevorzugt ein Kalander 51 angeordnet sein. Die mehrlagige Papierbahn 8 in einem Kalander 51, insbesondere in einem Soft Nip Kalander, geglättet wird, wobei die erste Papierlage 4 mit einer beheizbaren Walze kontaktiert wird, wobei eine Temperatur der beheizbaren Walze von 50°C bis 100°C, bevorzugt von 60°C bis 80°C, beträgt und wobei eine auf die erste Papierlage 4 wirkende Linienlast von 20 kN/m bis 100 kN/m, bevorzugt von 60°C bis 80°C, beträgt. Der Kalander 51 kann grundsätzlich auch als Hard-Nip, Schuhkalander oder Metall-Band-Kalander ausgebildet sein. Der Durchschnittsfachmann kann zur Erzielung jeweils gewünschter Oberflächeneigenschaften, beispielsweise einer bestimmten Oberflächenrauheit, bekanntermaßen diverse Einstellungen beim Kalandrieren, wie etwa Druck, Temperatur und Verweilzeit, entsprechend steuern bzw. variieren.

Schließlich erfolgt noch eine Konfektionierung der mehrlagigen, fertig getrockneten Papierbahn 8 bzw. Linerbahn 1. Eine übliche Konfektionierung kann zum Beispiel durch Aufrollen der fertig getrockneten, mehrlagigen Linerbahn 1 auf einer Trägerrolle 52 erfolgen. Alternativ kann eine Konfektionierung beispielsweise aber auch ein Zuschneiden der mehrlagigen Linerbahn 1 auf eine jeweils gewünschte Dimension eines mehrlagigen Liners 21 bzw. Verpackungspapiers und eine Stapelung der entsprechend zugeschnittenen Liner-Stücke umfassen.

Bei dem Verfahren kann insbesondere die mehrlagige Linerbahn 1 nach vollständiger Trocknung auf einen Endtrockengehalt von 91% bis 93% mit einem Flächengewicht von 70 g/m² bis 250 g/m² hergestellt werden, wobei die Drucklage 9 mit einem Flächengewicht von 40 g/m² bis 75 g/m² hergestellt werden kann. Entsprechende Flächengewichte bzw. Grammaturen können wie an sich bekannt durch Steuerung diverser Verfahrensparameter, wie etwa Konsistenzen in der Stoffaufbereitungsanlage 24 bzw. im Konstantteil, die auf den Stoffauflauf einer Papiermaschine aufgebrachte Mengen an Pulpe und deren Konsistenz, Durchzugsgeschwindigkeiten in verschiedenen Bereichen einer Papiermaschine und so weiter eingestellt werden.

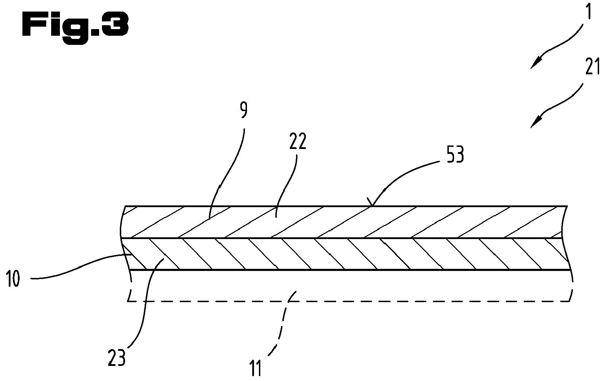

Ein Ausführungsbeispiel für einen bedruckbaren und mehrlagigen Liner 21 für Verpackungen ist in der Fig. 3 dargestellt.

Wie aus Fig. 3 ersichtlich umfasst der mehrlagige, bedruckbare Liner 21 eine Drucklage 9 überwiegend umfassend ein Cellulosefasern umfassendes, gebleichtes erstes Fasermaterial 22, eine mit der Drucklage 9 unmittelbar verbundene Trägerlage 10 überwiegend umfassend ein Cellulosefasern umfassendes, ungebleichtes zweites Fasermaterial 23. Dabei ist vorgesehen, dass das erste Fasermaterial 22 durch ein gebleichtes, frisches Kurzfasermaterial gebildet ist, und dass das zweite Fasermaterial 23 durch ein Recyclingfasermaterial gebildet ist, und dass der Liner 21 bezogen auf 100 Gew.% Gesamtmasse des Liners 21, zu 20 Gew.% bis 60 Gew.% aus dem ersten Fasermaterial 22 und zu 40 Gew.% bis 80 Gew.% aus dem zweiten Fasermaterial 23 gebildet ist.

Der in Fig. 3 gezeigte Liner 21 ist durch das Verbinden der in Fig. 2 dargestellten Papierlagen 4, 7 und optional einer oder mehrerer weiterer Papierlagen 11, zu einer mehrlagigen Papierbahn 8, und weiters durch eine mehrstufige Entwässerung/Trocknung der mehrlagigen Papierbahn 8 zu einer mehrlagigen Linerbahn 1 und schließlich der Konfektionierung der mehrlagigen Linerbahn 1 zu einem Liner 21 gebildet bzw. hergestellt.

Die Begriffe Cellulosefaser-Material bzw. Fasermaterial 22, 23 bezüglich des gegenständlichen Liners 21 wurden deshalb gewählt, da die Bezeichnungen Zellstoff bzw. Zellstoffmaterial für fertige Papiere bzw. Liner nicht gebräuchlich ist, sondern der Begriff Zellstoff eher als Bezeichnung eines Ausgangsmaterials zur Papierherstellung verwendet wird. Die gewählten unterschiedlichen Materialbezeichnungen sind jedoch in diesem Sinne und in erster Linie lediglich formaler Natur, und ist dieser Sachverhalt nicht als irgendwie geartete Material-Umwandlung im Zuge des Herstellungsverfahrens, insbesondere nicht als chemische Umwandlung zu einem chemisch anderen Material zu verstehen. Im Gegenteil sind im Zuge einer Papierherstellung auf einer Papiermaschine mit Zellstoffen als Ausgangsmaterial keine wesentlichen Materialumwandlungen zumindest im chemischen Sinne zu erwarten, wie dies dem Durchschnittsfachmann hinlänglich bekannt ist. Vorgänge in einer Papiermaschine umfassen bekanntermaßen primär mechanische und physikalische Vorgänge, wie zum Beispiel eine zumindest teilweise Ausrichtung der Cellulosefasern und Entwässerungsvorgänge etc.. Diese eben erläuterten Sachverhalte gelten im Rahmen dieses gesamten Dokuments. Des Weiteren ist unter einem ungebleichten Fasermaterial ein Fasermaterial zu verstehen, welches im Zuge des Herstellungsprozesses des bedruckbaren, mehrlagigen Liners nicht gebleicht wurde bzw. aus einem ungebleichten Zellstoffmaterial resultiert.

Der in der Fig. 3 dargestellte Liner 21 kann beispielsweise durchaus als eigenständiges Umverpackungspapier für Produkte als Primärverpackung, aber auch als Sekundärverpackung verwendet werden. Der Liner 21 für Verpackungen kann aber auch lediglich einen Bestandteil einer Verpackung, insbesondere eine oberste bzw. nach außen weisende Lage einer Verpackung bilden, wie dies zum Beispiel bei Kartonverpackungen üblich ist.

Unabhängig davon weist der Liner 21 zumindest eine zum Bedrucken vorgesehene bzw. bedruckbare Oberfläche 53 auf, welche wie in der Fig. 3 veranschaulicht durch die nach außen weisende Oberfläche 53 der Drucklage 9 gebildet ist.

Wie oben beschrieben können entsprechende Fasermaterialien durch Einsatz bzw. Herstellung entsprechender Zellstoffmaterialien bei dem ebenfalls bereits oben beschriebenen Herstellungsverfahren gebildet werden bzw. gebildet sein.

Ein Liner 21 für Verpackungen kann je nach Verwendungszweck bzw. Anforderungen durchaus auch weitere Papierlagen 11 umfassen, wobei zumindest eine solche optionale, weiteren Papierlage 11 mit der Trägerlage 10 verbunden wäre. Eine solche optionale, weitere Papierlage 11 ist in der Fig. 3 strichliert dargestellt.

Im Folgenden werden noch einige, insbesondere bevorzugte Eigenschaften des gegenständlichen Liners 21 für Verpackungen primär anhand von Kennwerten näher erläutert.

Die Drucklage 9 kann einen Streifenstauchwiderstands-Index nach ISO 9895:2008 von 30 Nm/g bis 34 Nm/g aufweisen, und die Trägerlage 10 kann einen Streifenstauchwiderstands-Index nach ISO 9895:2008 von 18 Nm/g bis 22 Nm/g aufweisen. Der Liner 21 kann einen Streifenstauchwiderstands-Index nach ISO 9895:2008 von 16 Nm/g bis 25 Nm/g aufweisen.

Ein Berstdruck-Index gemäß ISO 2758:2014 der Drucklage 9 kann von 3,0 kPa*m²/g bis 3,8 kPa*m²/g betragen, und ein Berstdruck-Index gemäß ISO 2758:2014 der Trägerlage 10 kann von 1,7 kPa*m²/g bis 2,3 kPa*m²/g betragen. Ein Berstdruck-Index gemäß ISO 2758:2014 des Liners 21 kann von 1,6 kPa*m²/g bis 2,5 kPa*m²/g betragen.

Bei Beaufschlagung der Drucklage 9 mit Wasser gemäß ISO 535:2014 kann der Liner 21 einen Cobb-60 Wert von 30 g/m² bis 40 g/m² aufweisen.

Als zweites Fasermaterial 23 kann Altpapier ausgewählt sein aus einer Gruppe bestehend aus Altpapiersorten gemäß EN 643 mit der Bezeichnung 1.02, 1.04, 1.05 und/oder 4.01.

Das zweite Fasermaterial 23 kann eine Zusammensetzung bezogen auf 100 Gew.% Gesamt-Trockenmasse des zweiten Fasermaterials 23 von 30 Gew.% bis 70 Gew.% Langfasermaterial, von 20 Gew.% bis 60 Gew.% Kurzfasermaterial, und von 10 Gew.% bis 50 Gew.% Ausschussmaterial haben.

Der Liner 21 kann ein Flächengewicht von 70 g/m² bis 250 g/m² aufweisen, wobei die Drucklage 9 ein Flächengewicht von 40 g/m² bis 75 g/m² aufweisen kann.

Ein Liner mit diesen Kennwerten zeichnet sich durch sehr gute Bedruckbarkeit aus, und ist insbesondere auch zum Bedrucken mit farblichen Druckbildern hoher Qualität und Farbechtheit geeignet.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Linerbahn | 32 | erste Verdünnungs- und Reinigungs-anlage |
| 2 | erste Pulpe | | |
| 3 | erster Zellstoff | 33 | zweite Mischbütte |
| 4 | erste Papierlage | 34 | zweiter Stoffstrom |
| 5 | zweite Pulpe | 35 | zweite Maschinenbütte |
| 6 | zweiter Zellstoff | 36 | zweite Verdünnungs- und Reini-gungsanlage |
| 7 | zweite Papierlage | | |
| 8 | mehrlagige Papierbahn | 37 | Maschinenfilter |
| 9 | Drucklage | 38 | Verdünnungsfilter |
| 10 | Trägerlage | 39 | Siebpartie |
| 11 | weitere Papierlage | 40 | Hybridformer |
| 12 | Langfaser-Recyclingfasermaterial | 41 | Gapformer |
| 13 | Kurzfaser-Recyclingfasermaterial | 42 | Pressenpartie |
| 14 | Ausschussmaterial | 43 | TriNip-Presse |
| 15 | Leimungsmittel | 44 | erster Walzenspalt |
| 16 | Oberflächenstärkeauftragsaggregat | 45 | zweiter Walzenspalt |
| 17 | Disperger | 46 | Schuhspalt |
| 18 | erste Formeranordnung | 47 | Trockenpartie |
| 19 | Langsieb | 48 | Vortrocknungspartie |
| 20 | zweite Formeranordnung | 49 | Nachtrocknungspartie |
| 21 | Liner | 50 | Trocknungszylinder |
| 22 | erstes Fasermaterial | 51 | Kalander |
| 23 | zweites Fasermaterial | 52 | Trägerrolle |
| 24 | Stoffaufbereitungsanlage | 53 | Oberfläche |
| 25 | Papiermaschine | 54 | Stärke |
| 26 | erster Stoffauflauf | 55 | Oberflächenleimungsmittel |
| 27 | zweiter Stoffauflauf | | |
| 28 | Refiner | | |
| 29 | erster Stoffstrom | | |
| 30 | erste Mischbütte | | |
| 31 | erste Maschinenbütte | | |

## Patentansprüche

1. Verfahren zur Herstellung einer bedruckbaren, mehrlagigen Linerbahn (1) für Verpackungen umfassend die Verfahrensschritte:
- Herstellung einer ersten Pulpe (2) umfassend einen Cellulosefasern umfassenden, gebleichten ersten Zellstoff (3) und Bildung einer ersten Papierlage (4) aus der ersten Pulpe (2),
- Herstellung einer zweiten Pulpe (5) umfassend einen Cellulosefasern umfassenden, ungebleichten zweiten Zellstoff (6) und Bildung einer zweiten Papierlage (7) aus der zweiten Pulpe (5),
- Verbinden der ersten Papierlage (4) und der zweiten Papierlage (7) zu einer mehrlagigen Papierbahn (8),
- mehrstufige Entwässerung/Trocknung der mehrlagigen Papierbahn (8) zu einer mehrlagigen Linerbahn (1), wobei durch die erste Papierlage (4) eine Drucklage (9) und durch die zweite Papierlage (7) eine mit dieser Drucklage (9) unmittelbar verbundene Trägerlage (10) gebildet wird,
- optional Herstellung einer oder mehrerer weiterer Papierlagen (11) und Verbinden zumindest einer dieser weiteren Papierlagen (11) mit der Trägerlage (10),
- Konfektionierung der mehrlagigen Linerbahn (1),
**dadurch gekennzeichnet, dass**
- die erste Papierlage (4) aus der ersten Pulpe (2) mittels einer ersten Formeranordnung (18) direkt auf einem Langsieb (19) der ersten Formeranordnung (18) gebildet wird,
- und dass die zweite Papierlage (7) aus der zweiten Pulpe (5) mittels einer zweiten Formeranordnung (20) direkt auf die erste Papierlage (4) gebildet wird,
- sodass die erste Papierlage (4) und die zweite Papierlage (7) zu der mehrlagigen Papierbahn (8) verbunden werden.

2. Verfahren nach Anspruch 1, **dadurch gekennzeichnet, dass** die erste Papierlage (4) mittels einer einen Hybridformer (40) umfassenden ersten Formeranordnung (18) gebildet wird.

3. Verfahren nach Anspruch 2, **dadurch gekennzeichnet, dass** die erste Papierlage (4) mit einer Entwässerungsrate von 190 L/s*m bis zu 220 L/s*m, bevorzugt von 200 L/s*m bis zu 220 L/s*m, entwässert wird.

4. Verfahren nach einem der vorhergehenden Ansprüche, **dadurch gekennzeichnet, dass** die zweite Papierlage (7) mittels einer als Gapformer (41) ausgebildeten zweiten Formeranordnung (20) gebildet wird.

5. Verfahren nach einem der vorhergehenden Ansprüche, **dadurch gekennzeichnet, dass** unmittelbar vor dem Verbinden der ersten Papierlage (4) und der zweiten Papierlage (7) eine Konsistenz der ersten Papierlage (4) auf 8% bis 14%, bevorzugt auf 11% bis 12%, und eine Konsistenz der zweiten Papierlage (7) auf 8% bis 14%, bevorzugt auf 11% bis 12%, eingestellt wird.

6. Verfahren nach einem der vorhergehenden Ansprüche, **dadurch gekennzeichnet, dass** die mehrlagige Papierbahn (8) mittels einer Pressenpartie (42) umfassend eine TriNip-Presse (43) entwässert und/oder getrocknet wird, wobei eine Konsistenz der mehrlagigen Papierbahn (8) auf 45% bis 54% eingestellt wird.

7. Verfahren nach Anspruch 6, **dadurch gekennzeichnet, dass** die erste Papierlage (4) direkt mit einer Zentralwalze der TriNip-Presse (43) kontaktiert und geglättet wird.

8. Verfahren nach Anspruch 6 oder 7, **dadurch gekennzeichnet, dass** die mehrlagige Papierbahn (8) durch einen ersten Walzenspalt (44), einen zweiten Walzenspalt (45) und einen Schuhspalt (46) geführt wird, wobei eine auf die mehrlagige Papierbahn (8) wirkende Linienlast in dem ersten Walzenspalt (44) von 70 kN/m bis 110 kN/m beträgt, in dem zweiten Walzenspalt (45) von 100 kN/m bis 140 kN/m beträgt, und in dem Schuhspalt (46) von 1000 kN/m bis 1400 kN/m beträgt.

9. Verfahren nach einem der vorhergehenden Ansprüche, **dadurch gekennzeichnet, dass** die mehrlagige Papierbahn (8) in einer Vortrocknungspartie (48) getrocknet wird, wobei ausschließlich die erste Papierlage (4) mit einem oder mehreren Trocknungszylindern (50) kontaktiert wird.

10. Verfahren nach einem der vorhergehenden Ansprüche **dadurch gekennzeichnet, dass** der ersten Pulpe (2) ein Leimungsmittel (15) in einer Menge von 0,5 kg/t bis 5 kg/t bezogen auf 100 Gew.% Gesamtmasse der Drucklage (9) zugegeben wird, und dass in einem Oberflächenstärkeauftragsaggregat (16) auf die erste Papierlage (4) das Leimungsmittel (15) oder ein weiteres Leimungsmittel in einer Menge von 0,5 kg/t bis 5 kg/t bezogen auf 100 Gew.% Gesamtmasse der Drucklage (9) aufgetragen wird und/oder dass auf die erste Papierlage (4) eine Stärke (54) in einer Menge von 30 kg/t bis 60 kg/t bezogen auf 100 Gew.% Gesamtmasse der Drucklage aufgetragen wird.

11. Verfahren nach einem der vorhergehenden Ansprüche, **dadurch gekennzeichnet, dass** die mehrlagige Papierbahn (8) in einer Nachtrocknungspartie (49) getrocknet wird, wobei die erste Papierlage (4) mit einem oder mehreren Trocknungszylindern (50) kontaktiert wird, oder wobei die die erste Papierlage (4) und die zweite Papierlage (7) mit einem oder mehreren Trocknungszylindern (50) kontaktiert wird.

12. Verfahren nach einem der vorhergehenden Ansprüche, **dadurch gekennzeichnet, dass** die mehrlagige Papierbahn (8) in einem Kalander (51), insbesondere in einem Soft Nip Kalander, geglättet wird, wobei die erste Papierlage (4) mit einer beheizbaren Walze kontaktiert wird, wobei eine Temperatur der beheizbaren Walze von 50°C bis 100°C, bevorzugt von 60°C bis 80°C, beträgt und wobei eine auf die erste Papierlage (4) wirkende Linienlast von 20 kN/m bis 100 kN/m, bevorzugt von 60°C bis 80°C, beträgt.

13. Verfahren nach einem der vorhergehenden Ansprüche, **dadurch gekennzeichnet, dass** als erster Zellstoff (3) ein gebleichtes, frisches Kurzfasermaterial bereitgestellt oder hergestellt wird, und dass als zweiter Zellstoff (6) ein Recyclingfasermaterial bereitgestellt oder hergestellt wird, und dass die mehrlagige Linerbahn (1) bezogen auf 100 Gew.% Gesamtmasse der mehrlagigen Linerbahn (1) zu 20 Gew.% bis 60 Gew.% aus dem ersten Zellstoff (3) und zu 40 Gew.% bis 80 Gew.% aus dem zweiten Zellstoff (6) hergestellt wird.

14. Verfahren nach einem der vorhergehenden Ansprüche, **dadurch gekennzeichnet, dass** die mehrlagige Linerbahn (1) nach vollständiger Trocknung auf einen Endtrockengehalt von 91% bis 93% mit einem Flächengewicht von 70 g/m² bis 250 g/m² hergestellt wird, wobei die Drucklage (9) mit einem Flächengewicht von 40 g/m² bis 75 g/m² hergestellt wird.

15. Bedruckbarer, mehrlagiger Liner (21) für Verpackungen umfassend
- eine Drucklage (9) überwiegend umfassend ein Cellulosefasern umfassendes, gebleichtes erstes Fasermaterial (22),
- eine mit der Drucklage (9) unmittelbar verbundene Trägerlage (10) überwiegend umfassend ein Cellulosefasern umfassendes, ungebleichtes zweites Fasermaterial (23),
**dadurch gekennzeichnet, dass**
- die Drucklage (9) aus einer ersten Pulpe (2) umfassend das erste Fasermaterial (22) mittels einer ersten Formeranordnung (18) direkt auf einem Langsieb (19) der ersten Formeranordnung (18) gebildet ist,
- und dass die Trägerlage (10) aus einer zweiten Pulpe (5) umfassend das zweite Fasermaterial (23) mittels einer zweiten Formeranordnung (20) direkt auf die Drucklage (9) gebildet ist.

16. Liner (21) nach Anspruch 15, **dadurch gekennzeichnet, dass** das erste Fasermaterial (22) durch ein gebleichtes, frisches Kurzfasermaterial gebildet ist, und dass das zweite Fasermaterial (23) durch ein Recyclingfasermaterial gebildet ist, und dass der Liner (21) bezogen auf 100 Gew.% Gesamtmasse des Liners (21), zu 20 Gew.% bis 60 Gew.% aus dem ersten Fasermaterial (22) und zu 40 Gew.% bis 80 Gew.% aus dem zweiten Fasermaterial (23) gebildet ist.

17. Liner (21) nach Anspruch 15 oder 16, **dadurch gekennzeichnet, dass** die Drucklage (9) einen Streifenstauchwiderstands-Index nach ISO 9895:2008 von 30 Nm/g bis 34 Nm/g aufweist, und/oder dass die Trägerlage (10) einen Streifenstauchwiderstands-Index nach ISO 9895:2008 von 18 Nm/g bis 22 Nm/g aufweist.

18. Liner (21) nach einem der Ansprüche 15 bis 17, **dadurch gekennzeichnet, dass** der Liner (21) einen Streifenstauchwiderstands-Index nach ISO 9895:2008 von 16 Nm/g bis 25 Nm/g aufweist.

19. Liner (21) nach einem der Ansprüche 15 bis 18, **dadurch gekennzeichnet, dass** ein Berstdruck-Index gemäß ISO 2758:2014 der Drucklage (9) von 3,0 kPa*m²/g bis 3,8 kPa*m²/g beträgt, und/oder dass ein Berstdruck-Index gemäß ISO 2758:2014 der Trägerlage (10) von 1,7 kPa*m²/g bis 2,3 kPa*m²/g beträgt.

20. Liner (21) nach einem der Ansprüche 15 bis 19, **dadurch gekennzeichnet, dass** ein Berstdruck-Index gemäß ISO 2758:2014 des Liners (21) von 1,6 kPa*m²/g bis 2,5 kPa*m²/g beträgt.

21. Liner (21) nach einem der Ansprüche 15 bis 20, **dadurch gekennzeichnet, dass** der Liner (21) bei Beaufschlagung der Drucklage (9) mit Wasser gemäß ISO 535:2014 einen Cobb-60 Wert von 30 g/m² bis 40 g/m² aufweist.

22. Liner (21) nach einem der Ansprüche 15 bis 21, **dadurch gekennzeichnet, dass** als zweites Fasermaterial (23) Altpapier ausgewählt ist aus einer Gruppe bestehend aus Altpapiersorten gemäß EN 643 mit der Bezeichnung 1.02, 1.04, 1.05 und/oder 4.01.

23. Liner (21) nach einem der Ansprüche 15 bis 22, **dadurch gekennzeichnet, dass** das zweite Fasermaterial (23) in einer Zusammensetzung bezogen auf 100 Gew.% Gesamt-Trockenmasse des zweiten Fasermaterials (23) von 30 Gew.% bis 70 Gew.% Langfasermaterial, von 20 Gew.% bis 60 Gew.% Kurzfasermaterial, und von 10 Gew.% bis 50 Gew.% Ausschussmaterial gebildet ist.

24. Liner (21) nach einem der Ansprüche 15 bis 23, **dadurch gekennzeichnet, dass** der Liner (21) ein Flächengewicht von 70 g/m² bis 250 g/m² aufweist, wobei die Drucklage (9) ein Flächengewicht von 40 g/m² bis 75 g/m² aufweist.
